(19) Europäisches Patentamt
European Patent Office
Office européen des brevets

(11) **EP 4 579 896 A1**

(12) **EUROPEAN PATENT APPLICATION**

(43) Date of publication:
**02.07.2025 Bulletin 2025/27**

(21) Application number: **24205873.3**

(22) Date of filing: **10.10.2024**

(51) International Patent Classification (IPC):
$H01M\ 50/143$ (2021.01)   $H01M\ 50/152$ (2021.01)
$H01M\ 50/213$ (2021.01)   $H01M\ 50/291$ (2021.01)
$H01M\ 50/559$ (2021.01)   $H01M\ 50/342$ (2021.01)

(52) Cooperative Patent Classification (CPC):
H01M 50/152; H01M 50/143; H01M 50/15;
H01M 50/213; H01M 50/291; H01M 50/3425;
H01M 50/559; H01M 2200/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.12.2023 PCT/CN2023/143529**

(71) Applicants:
• **Huizhou EVE Power Co., Ltd
Tonghu Town, Zhongkai High-tech District
Huizhou, Guangdong 516039 (CN)**
• **Eve Power Co., Ltd.
Jingmen, Hubei 448000 (CN)**

(72) Inventors:
• **HUANG, Liming
Guangdong, 516039 (CN)**
• **MIN, Changfei
Guangdong, 516039 (CN)**
• **LIU, Rongwei
Guangdong, 516039 (CN)**
• **XU, Yuebin
Guangdong, 516039 (CN)**
• **HE, Wei
Guangdong, 516039 (CN)**
• **LIU, Jincheng
Guangdong, 516039 (CN)**

(74) Representative: **Murgitroyd & Company
165-169 Scotland Street
Glasgow G5 8PL (GB)**

(54) **EXPLOSION-PROOF STRUCTURE, BATTERY AND BATTERY PACK**

(57) An explosion-proof structure, a battery, and a battery pack are provided. The explosion-proof structure includes a cover plate (110) and an explosion-proof groove (120) including one or more first sub-grooves (121) and one or more second sub-grooves (122). H1<H2, in which H1 denotes a thickness of a part of the cover plate where the first sub-groove is located, and H2 denotes a thickness of a part of the cover plate where the second sub-groove is located. The part of the cover plate where the first sub-groove is located is opened under a first pressure denoted by P1, and the part of the cover plate where the second sub-groove is located is opened under a second pressure denoted by P2, in which the first pressure satisfies 0.5Mpa<P1<1.5Mpa; and the second pressure satisfies 1.5Mpa≤P2<2.5Mpa.

FIG. 3

**Description**

TECHNICAL FIELD

The present application belongs to the technical field of batteries, and more particularly, relates to an explosion-proof structure, a battery, and a battery pack.

BACKGROUND

In the process of using the power battery, it is possible to cause the internal air pressure of the battery to rise above a safe value due to a short circuit or other reasons, thereby causing potential hazards such as explosion. In order to minimize potential hazards, an explosion-proof membrane is generally provided on the cover plate of the battery, and the explosion-proof membrane gradually deforms along with the increase of the internal pressure until the explosion-proof action is started.

In the process of thermal runaway of the battery, the temperature of the battery rises to a certain degree, and the internal electrolyte disintegrates a combustible gas such as methane. As the temperature of the battery continues to rise, the internal electrolyte disintegrates a combustion gas such as oxygen. When the internal pressure of the battery further increases, the explosion-proof membrane explodes. At the moment when the explosion-proof valve explodes, the combustible gas, the combustion gas, and the substance in the battery interact to increase the degree of thermal runaway and easily cause explosion of the battery.

TECHNICAL PROBLEM

An embodiment of the present application provides an explosion-proof structure, a battery, and a battery pack to solve a problem in the related art that when the explosion-proof structure is opened, the combustible gas, the combustion gas, and the substance in the battery interact to increase the degree of thermal runaway and easily cause explosion of the battery.

SUMMARY

In a first aspect, according to an embodiment of the present application, it is provided an explosion-proof structure applied to a battery, including:

a cover plate;

an explosion-proof groove provided on the cover plate, in which the explosion-proof groove includes one or more first sub-grooves and one or more second sub-grooves; $H1 < H2$, in which $H1$ denotes a thickness of a part of the cover plate where the first sub-groove is located, and $H2$ denotes a thickness of a part of the cover plate where the second sub-groove is located; the part of the cover plate where the first sub-groove is located is opened under a first pressure denoted by $P1$, and the part of the cover plate where the second sub-groove is located is opened under a second pressure denoted by $P2$, in which the first pressure satisfies $0.5Mpa < P1 < 1.5Mpa$; and the second pressure satisfies $1.5Mpa \leq P2 < 2.5Mpa$.

In a second aspect, according to an embodiment of the present application, it is further provided a battery including:

the explosion-proof structure mentioned above;

a core;

a housing in which the core is mounted, in which one end of the housing is formed with an opening, and the cover plate is sealingly connected to the housing to seal the opening.

In a third aspect, according to an embodiment of the present application, it is further provided a battery pack including the battery as described above.

BENEFICIAL EFFECT

Beneficial effects of the present application are as follows. According to the explosion-proof structure, the cover plate and the battery provided in the embodiment of the present application, a first sub-groove and a second sub-groove are provided on the cover plate, the thickness of the part of the cover plate where the first sub-groove is located is smaller than the thickness of the part of the cover plate where the second sub-groove is located. When the internal pressure of the battery is increased, the part of the cover plate where the first sub-groove is located is first opened, and the part of the cover plate where the second sub-groove is located is then opened, so that the pressure-relief of the battery at two times is formed. The first opening can discharge the combustible gas, and the second opening can discharge the combustion gas, thereby realizing the purpose of time-division discharging of the combustible gas and the combustion gas. The minimum value of the first pressure P1 is larger than 0.5 Mpa and the maximum value of the first pressure P1 is less than 1.5 Mpa, which is set reasonably. Therefore, the combustible gas decomposed by the electrolyte can be discharged first, thereby avoiding the opening of the battery during normal operation. The minimum value of the second pressure P2 is 1.5 Mpa and the maximum value of the second pressure P2 is less than 2.5 Mpa, thus avoiding the explosion of the battery. In this way, it can overcome the problems of increasing the degree of thermal runaway and causing explosion of the battery due to the interaction of the combustible gas, the combustion gas and the substance in the battery when the explosion-proof structure is opened in the related art. The explosion-proof structure has advantages of simple structure and good explosion-proof property.

BRIEF DESCRIPTION OF THE DRAWINGS

FIG. 1 is a top view of a first configuration of an explosion-proof structure according to embodiments of the present application.

FIG. 2 is a first top view of the first configuration of the explosion-proof structure in accordance with embodiments of the present application.

FIG. 3 is a second top view of the first configuration of the explosion-proof structure in accordance with embodiments of the present application.

FIG. 4 is a sectional view taken along line A-A in FIG. 3.

FIG. 5 is a partially enlarged view at detail B in FIG. 3.

FIG. 6 is a sectional view taken along line C-C in FIG. 5.

FIG. 7 is a partially enlarged view at detail D in FIG. 6.

FIG. 8 is sectional view taken along line E-E in FIG. 5.

FIG. 9 is an annotated view of an explosion-proof structure according to embodiments of the present application.

FIG. 10 is a perspective view of an explosion-proof structure according to embodiments of the present application.

FIG. 11 is a third top view of the first configuration of the explosion-proof structure in accordance with embodiments of the present application.

FIG. 12 is a fourth top view of the first configuration of the explosion-proof structure in accordance with embodiments of the present application.

FIG. 13 is a fifth top view of the first configuration of the explosion-proof structure in accordance with embodiments of the present application.

FIG. 14 is a top view of a second configuration of an explosion-proof structure according to embodiments of the present application.

FIG. 15 is a sectional view taken along line I-I of FIG. 14.

FIG. 16 is a partially enlarged view at detail F in FIG. 14.

FIG. 17 is a partially enlarged view at detail G in FIG. 15.

FIG. 18 is a top view of an explosion-proof groove provided on a second sub-portion according to embodiments of the present application.

FIG. 19 is a sectional view taken along line K-K in FIG. 18.

FIG. 20 is an annotated view of a first sub-groove of an explosion-proof structure according to embodiments of the present application.

FIG. 21 is a top view of a fourth configuration of an explosion-proof structure according to embodiments of the present application.

FIG. 22 is a sectional view taken along line L-L in FIG. 21.

FIG. 23 is an annotated view of FIG. 21.

FIG. 24 is a perspective view of a battery according to embodiments of the present application.

FIG. 25 is a top view of FIG. 24.

FIG. 26 is a sectional view taken along line G-G in FIG. 25.

FIG. 27 is a partially enlarged view at detail H in FIG. 26.

FIG. 28 is a partially enlarged view at detail M in FIG. 26.

FIG. 29 is a partial perspective view of a battery pack according to embodiments of the present application.

FIG. 30 is a side view of FIG. 29.

FIG. 31 is a sectional view taken along line H-H in FIG. 30.

Reference signs:

100, battery; 110, cover plate; 111, first side; 1111, first section; 1112, second section; 1113, first end; 1114, second end; 1115, third end; 1116, fourth end; 1117, third section; 112, second side; 1121, fifth end; 1122, sixth end; 113, first sub-portion; 114, second sub-portion; 1141, concave platform; 1142, convex platform; 115, third sub-portion; 116, fourth sub-portion; 120, explosion-proof groove; 121, first sub-groove; 1211, first wall; 1212, second wall; 122, second sub-groove; 130, mounting seat; 131, mounting slot; 132, baffle; 133 first sub-board; 134. second sub-board; 140, core; 150, housing; 151, opening; 152, positive terminal; 153, flange; 154, press plate; 155, sealing component; 160, first current collector plate; 170, second current collector plate; and 180, insulator.

DETAILED DESCRIPTION

Embodiments of the present application provide an explosion-proof structure, a battery, and a battery pack to solve a problem in the related art that when the explosion-proof structure explodes, the combustible gas, the combustion gas, and the substance in the battery interact to increase the degree of thermal runaway and easily cause explosion of the battery. The following description will be made in conjunction with the accompanying drawings.

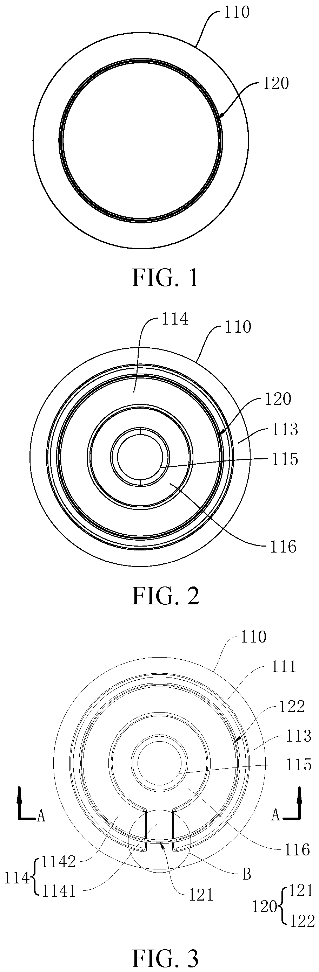

Referring to FIG. 1, FIG. 2, FIG. 3, FIG. 14, FIG. 18, and FIG. 21, an explosion-proof structure provided in an embodiment of the present application is applied to a battery, and the battery may be a cylindrical battery. The explosion-proof structure includes a cover plate 110 and an explosion-proof groove 120. The cover plate 110 is of a disk-shaped structure. The cover plate 110 may be made of a steel material, such as a SPCC material, a stainless steel material such as SUS410, SUS306, SUS316, SUS430, and SUS444. When the SPCC material is used, nickel may be coated on both sides of the cover plate 110. The thickness of the coating layer ranges from $0.3\mu m$ to $8\mu m$. The thickness of the coating layer on both sides of the cover plate 110 may be the same or different. The cover plate 110 is integrally provided with an explosion-proof groove 120 including a first sub-groove 121 and a second sub-groove 122. A thickness of a part of the cover plate 110 where the first sub-groove 121 is located is denoted by H1, and a thickness of a part of the cover plate where the second sub-groove 122 is located is denoted by H2, which satisfies H1<H2. The part of the cover plate 110 where the first sub-groove 121 is located is opened under a first pressure, and the part of the cover plate 110 where the second sub-groove 122 is located is opened under a second pressure. The first pressure is denoted by P1, and satisfies 0.5Mpa<P1<1.5Mpa. The second pressure is denoted by P2, and satisfies 1.5Mpa≤P2<2.5Mpa.

Under the normal operation of the battery, the internal pressure of the battery will reach 0.5Mpa. Generally, the internal pressure of the battery is increased along with the rise of the temperature and the decomposition of the electrolyte during a period of time before the battery triggers thermal runaway. In order to allow the combustible gas decomposed by the electrolyte to be discharged first without causing the opening of the battery under the normal operation of the battery, the first pressure P1 is set to (2.4Mpa, 1.5Mpa). For example, the value of the first pressure P1 may be 0.6Mpa, 0.7Mpa, 0.8Mpa, 0.9Mpa, 1.0Mpa, 1.1Mpa, 1.2Mpa, 1.3Mpa, 1.4Mpa or other values not specified. The internal pressure of the battery at the end of the thermal runaway of the battery is increased to a certain extent, so that the explosion-proof valve is opened and released the internal combustion substance of the battery to avoid occurrence of explosion of the battery. So, the second pressure P2 is set to [1.5Mpa, 2.3Mpa), for example, a value of the second pressure P2 may be 1.6Mpa, 1.7Mpa, 1.8Mpa, 1.9Mpa, 2.0Mpa, 2.1Mpa, 2.2Mpa, 2.3Mpa, 2.4Mpa or other values not specified.

Since the thickness of the part of the cover plate 110 where the first sub-groove 121 is located is smaller than the thickness of the part of the cover plate 110 where the second sub-groove 122 is located, the part of the cover plate 110 where the first sub-groove 121 is located is first opened as the air pressure inside the battery is increased, and then the part of the cover plate 110 where the second sub-groove 122 is located is then opened. The part of the cover plate 110 where the first sub-groove 121 is located is opened under the first pressure, and the opening of the first sub-groove 121 is used for discharging the combustible substance. The part of the cover plate 110 where the second sub-groove 122 is located is opened under the second pressure, and the second sub-groove 122 is opened for discharging the combustion substance. The first pressure is smaller than the second pressure, and the first pressure and the second pressure are set reasonably. When the battery is properly operated, it can realize the pressure relief of the battery at two times. Further, the combustible gas can be discharged via the first opening, and the combustion gas can be discharged via the second opening, thereby realizing the purpose of time-division discharge of the combustible gas and the combustion gas. Therefore, it can overcome the problems of increasing the degree of thermal runaway and causing explosion of the battery due to the interaction of the combustible gas, the combustion gas and the substance in the battery when the explosion-proof structure is opened in the related art.

The above-mentioned explosion-proof structure has various configurations, and will be described in detail below with reference to the accompanying drawings.

A first configuration is as follows. As shown in FIG. 1, the cover plate 110 includes first and second sides 111 and 112 oppositely disposed, each of the first and second sub-grooves 121 and 122 is disposed on the first side 111. The first and second sub-grooves 121 and 122 are disposed on the first side 111 of the cover plate 110 to facilitate processing of the first and second sub-grooves 121 and 122. The first and second sub-grooves 121 and 122 communicate with each other, and protections of both the first and second sub-grooves 121 and 122 form a closed annular shape on one side of the cover plate 110. The projections of both the first sub-groove 121 and the second sub-groove 122 on one side of the cover plate 110 encloses a closed annular shape to ensure that the part of the cover plate 110 where the second sub-groove 122 is located is pierced from the junction of the first sub-groove 121 and the second sub-groove 122 after the part of the cover plate 110 where the first sub-groove 121 is located is opened, while ensuring the pressure relief area. In this way, it can facilitate the opening of the part of the cover plate 110 where the second sub-groove 122 is located, thereby ensuring that the explosion-proof structure can be smoothly opened. A part of the cover plate 110 which is at inner sides of both the first sub-groove 121 and the second sub-groove 122 completely fall off from a part of the cover plate 110 which is at outer sides of both the first sub-groove 121 and the second sub-groove 122, thereby realizing the complete opening of the explosion-proof structure and ensuring the explosion-proof effect.

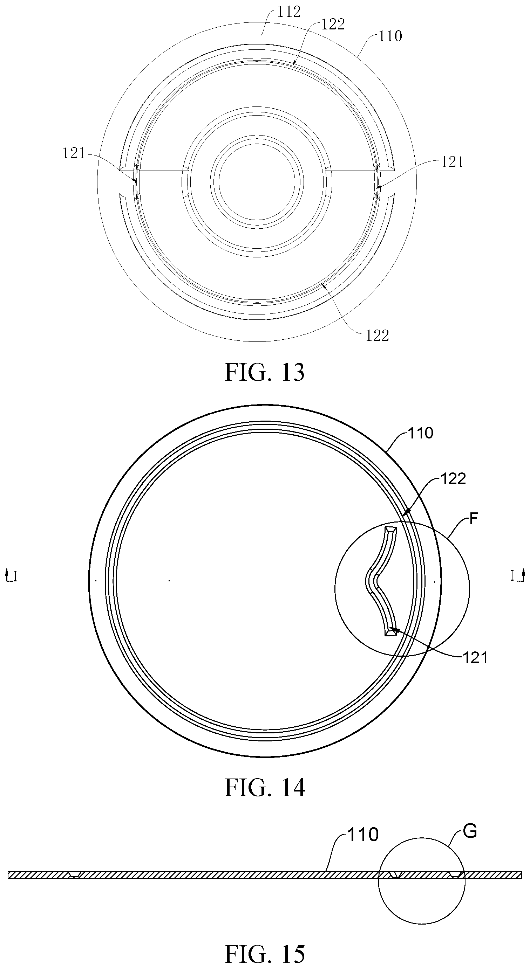

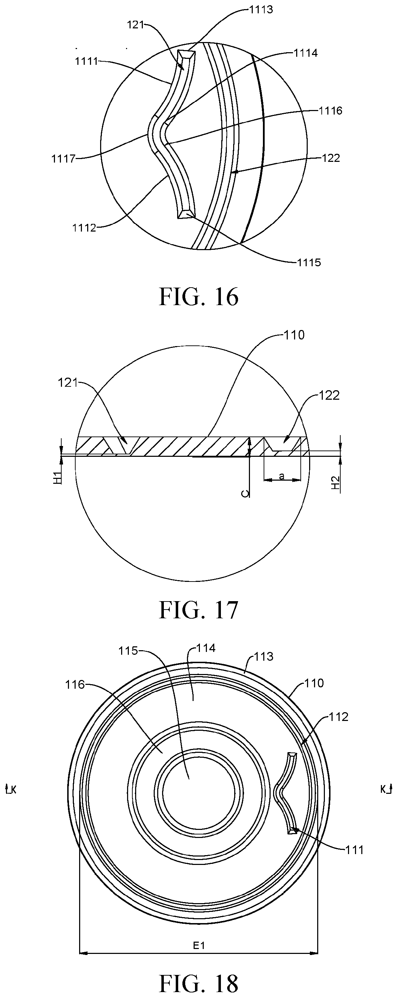

A second configure is as follows. As shown in FIGS. 14 and 16, a shape of the second sub-groove 122 is annular in a radial direction of the cover plate 110, and the first sub-groove 121 is spaced apart from the second sub-groove 122. The first sub-groove 121 includes a first section 1111 having a first end 1113 and a second end 1114, and the second section 1112 having a third end 1115 and a fourth end 1116. The distance between the first end 1113 and the third end 1115 is greater than the distance between the second end 1114 and the fourth end 1116. Here, the first sub-groove 121 is disposed more adjacent to a center of the cover plate 110 than the second sub-groove 122. When the second sub-groove 122 is opened under the second pressure P2, a part of the cover plate 110 which is at the inner side of the second sub-groove 122 is completely separated from a part of the cover plate 110 which is at outer side of the second sub-groove 122, and thus the opening for the pressure relief at two times is large enough to ensure pressure-relief effect and avoid occurrence of battery explosion.

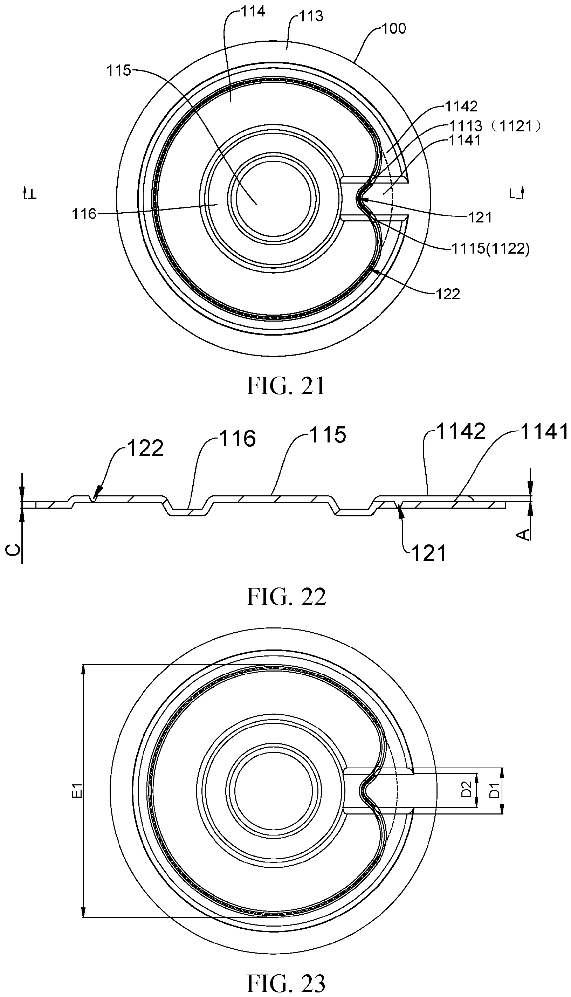

A third configuration is as follows. As shown in FIG. 21, a shape of the second sub-groove 122 is circular arc. The second sub-groove 122 includes a fifth end 1121 and a sixth end 1122, and the first sub-groove 121 is located between the fifth end 1121 and the sixth end 1122. The first sub-groove 121 includes a first section 1111 having a first end 1113 and a second end 1114, and a second section 1112 having a third end 1115 and a fourth end 1116. The distance between the first end 1113 and the third end 1115 is greater than the distance between the second end 1114 and the fourth end 1116.

A fourth configuration is as follows. On the basis of the third configuration, referring to FIG. 21, the first sub-groove 121 communicates with the second sub-groove 122, the first end 1113 is connected to the fifth end 1121, and the third end 1115 is connected to the sixth end 1122. The first sub-groove 121 communicates with the second sub-groove 122 to form a closed shape. The first sub-groove 121 is opened under the first pressure, and the second sub-groove 122 is opened under the second pressure from the first end 1113 and the third end 1115 of the first sub-groove 121, thereby facilitating the opening of the second sub-groove 122. In addition, the first sub-groove 121 and the second sub-groove 122 are formed a larger closed shape. Under the second pressure, the part of the cover plate 110 which is at the inner sides of both the first sub-groove 121 and the second sub-groove 122 are completely separated from the part of the cover plate 110 which is at the outer sides of both the first sub-groove 121 and the second sub-groove 122, and the pressure-relief opening is large enough to ensure the pressure-relief effect and prevent the battery from being blocked.

In some embodiments, the first section 1111 and the second section 1112 of the first sub-groove 121 are line sections, and an angle is formed between the first section 1111 and the second section 1112. So, when the first sub-groove 121 is opened, the first sub-groove 121 is first opened from the connecting ends of both the first section 1111 and the second section 1112. The first sub-groove 121 is completely opened in the direction in which the first section 1111 and the second section 1112 extend.

In some embodiments, as shown in FIG. 16, the first section 1111 and the second section 1112 of the first sub-groove 121 are arc shape, so that the length of the first sub-groove 121 is increased as much as possible. Thus, the size of the pressure relief opening is increased when the first sub-groove 121 is opened, and the effect of the pressure relief at one time is ensured.

In some embodiments, referring to FIG. 16, the first sub-groove 121 further includes a third section 1117 disposed between the second end 1114 and the fourth end 1116, and the third section 1117 smoothly transitions the first section 1111 and the second section 1112. It is ensured that the first sub-groove 121 can be opened smoothly.

In some embodiments, referring to FIG. 16, the first section 1111, the second section 1112, and the third section 1117 are all arcuate, and the bending directions of both the first section 1111 and the second section 1112 are different from the bending direction of the third section 1117. The smooth transition connection between the first section 1111 and the second section 1112 is realized, and the opening for the pressure relief at one time is increased as much as possible, so as to ensure smooth opening of the pressure relief at one time.

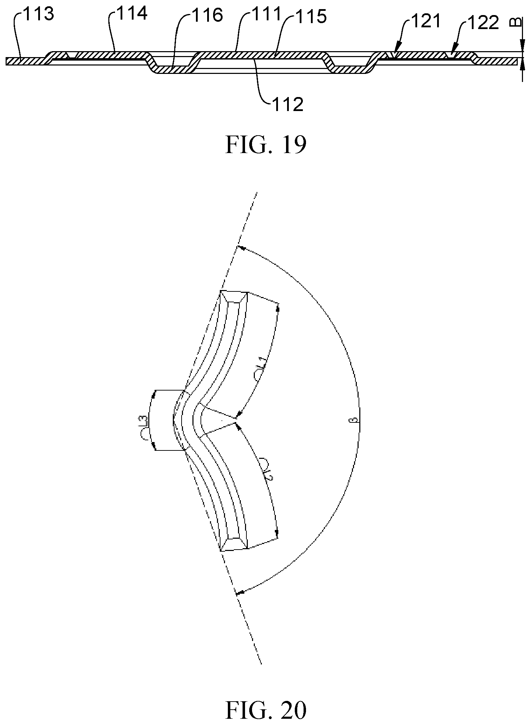

In some embodiments, referring to FIG. 20, an included angle $\beta$ is formed between a chord corresponding to an arc shape of the first section 1111 and a chord corresponding to an arc shape of the second section 1112, where the included angle $\beta$ satisfies $30° \leq \beta \leq 150°$. For example, the included angle $\beta$ has values of 30°, 40°, 50°, 60°, 70°, 80°, 90°, 100°, 110°, 120°, 130°, 140°, 150°, or other values not specified. The chord corresponding to the arc shape of the first section 1111 refers to a straight line in which a chord corresponding to an inner arc of the first section 1111 is located. The chord corresponding to the arc shape of the second section 1112 refers to a straight line in which a chord corresponding to an inner arc of the second section 1112 is located. The angle between the first section 1111 and the second section 1112 is reasonable. In the spanning range of the angle between the first section 1111 and the second section 1112, the larger the included angle $\beta$ is, the longer the length of the first sub-groove 121 correspondingly is; and the larger included angle $\beta$ is, the sooner the cover plate 110 where the first sub-groove 121 is located is opened. The included angle $\beta$ is set according to requirements.

In some embodiments, as shown in FIG. 20, the arc length of the first section 1111 is denoted by L1, the arc length of the second section 1112 is denoted by L2, and the arc length of the third section 1117 is denoted by L3, and satisfies $1mm \leq L3 \leq 3mm$. The arc length of the first section 1111 is equal to the arc length of the second section 1112, i.e. L1=L2, which satisfies $4mm \leq L1=L2 \leq 8mm$. The first section 1111 and the second section 1112 are arranged symmetrically. As for $1mm \leq L3 \leq 3mm$, where the value of the arc length L3 of the third section 1117 may be 1 mm, 2 mm, 3 mm or other values not specified. As for $4mm \leq L1=L2 \leq 8mm$, the arc length L1 of the first section 1111 and the arc length L2 of the second section 1112 may each be 4 mm, 5 mm, 6 mm, 7 mm, 8 mm or other values not specified. The arc lengths of the first section 1111, the second section 1112 and the third section 1117 are arranged reasonably. When the pressure relief action is performed, the third section 1117 is broken down and extended towards two sides. Because the first section 1111 and the second section 1112 are arranged symmetrically, so that the forces on the two sides are the same and the opening speed is the same, thereby ensuring the reliability of the pressure relief at one time.

In some embodiments, referring to FIG. 16, the second end 1114 is disposed more proximate to the center of the cover plate 110 than the first end 1113, and the fourth end 1116 is disposed more proximate to the center of the cover plate 110 than the third end 1115. As a variant, the first end 1113 is disposed more adjacent to the center of the cover plate 110 than the second end 1114, and the third end 1115 is disposed more adjacent to the center of the cover plate 110 than the fourth end 1116. The protruding direction of the first sub-groove 121 may be reasonably arranged according to the actual size of the cover plate 110.

In some embodiments, the sectional shape of the explosion-proof groove 120 is V-shaped, trapezoidal, semicircular, U-shaped, or parabolic in the thickness direction of the cover plate 110. The sectional shape of the first sub-groove 121 may be the same as the sectional shape of the second sub-groove 122. The sectional shape of the explosion-proof groove 120 may be reasonably set according to the processing technology.

In some embodiments, referring to FIGS. 1, 2, 3, 9, 18, and 23, the outer diameter of the annular shape in which the second sub-groove 122 is located is denoted by E1, and satisfies 24mm≤E1≤40mm, such as 30mm≤E1≤35mm, in the top view of the cover plate 110. The value of the outer diameter E1 may be 24mm, 25 mm, 26mm, 27mm, 28mm, 29mm, 30mm, 31mm, 32mm, 33mm, 34mm, 35mm, 36mm, 37mm, 38mm, 39mm, 40mm, or other values not specified. The position of the second sub-groove 122 on the cover plate 110 is reasonably set to form a sufficiently large pressure relief area to ensure a pressure relief effect.

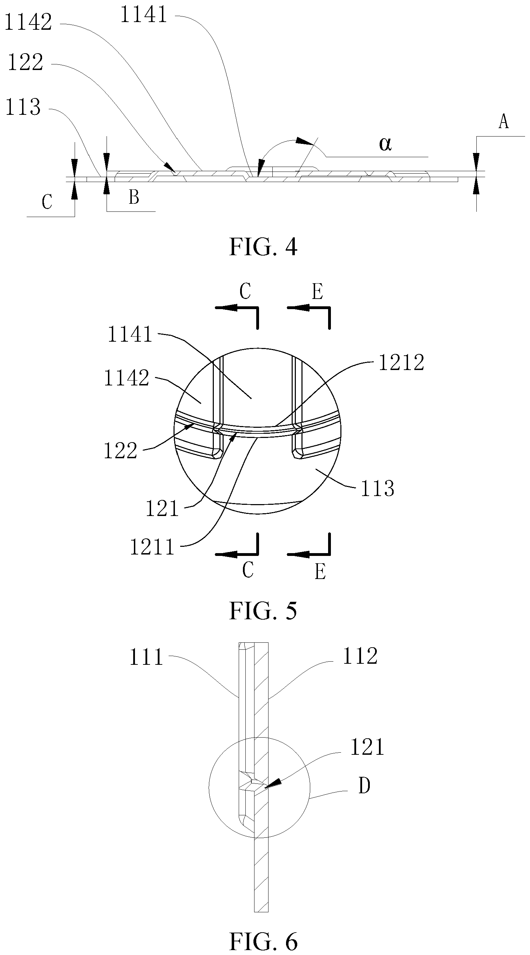

In some embodiments, referring to FIGS. 6, 7, and 17, a thickness of the part of the cover plate 110 where the first sub-groove 121 is located is denoted by H1, and satisfies 20μm≤H1≤115μm; and a thickness of the part of the cover plate 110 where the second sub-groove 122 is located is denoted by H2, and satisfies 25μm≤H2≤135μm. For example, the thickness of the part of the cover plate 110 where the first sub-groove 121 is located satisfies 45μm≤H1≤55μm; and the thickness of the part of the cover plate 110 where the second sub-groove 122 is located satisfies 80μm≤H2≤100μm. The value of the thickness H1 may be 20μm, 30μm, 40μm, 50μm, 60μm, 70μm, 80μm, 90μm, 100μm, 110μm, 115μm or other values not specified. The value of the thickness H2 may be 25μm, 35μm, 45μm, 55μm, 65μm, 75μm, 85μm, 95μm, 105μm, 115μm, 125μm, 135μm, or other values not specified.

It will be appreciated that the thicker the thickness of the part of the cover plate 110 where the explosion-proof groove 120 is located, the greater the pressure opening the explosion-proof groove 120. The thickness of the part of the cover plate 110 where the explosion-proof groove 120 is located is positively related to the pressure opening the explosion-proof groove 120. If the thickness of the part of the cover plate 110 where the explosion-proof groove 120 is located is relatively thin, the explosion-proof groove 120 may be opened during the normal operation of the battery, so as to affect the performance of the battery. If the thickness of the part of the cover plate 110 where the explosion-proof groove 120 is located is relatively thick, the pressure opening the explosion-proof groove 120 is relatively large, and the battery is susceptible to explosion. In the embodiment of the present application, the thickness range of the part of the cover plate 110 in which the explosion-proof groove 120 is located is reasonably designed, so that it can realize the pressure relief at two times and the explosion prevention of the battery while the normal operation of the battery is satisfied.

In some embodiments, a difference between the thickness H2 of the part of the cover plate 110 where the second sub-groove 122 is located and the thickness H1 of the part of the cover plate 110 where the first sub-groove 121 is located is denoted by H2-H1, and satisfies 5μm≤H2-H1≤20μm. The value of the difference H2-H1 may be 5μm, 10μm, 15μm, 20μm, or other values not specified. The difference between the thickness H2 and the thickness H1 is set to be within a reasonable range to ensure the reliability of the primary pressure relief and the secondary pressure relief.

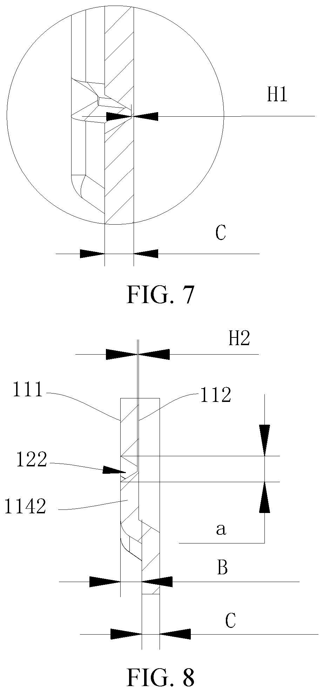

In some embodiments, referring to FIGS. 7, 8 and 17, the thickness of the area of the cover plate 110 excluding the explosion-proof groove 120 is denoted by C, and satisfies 0.4mm≤C≤1.0mm. Where, the value of the thickness C may be 0.4mm, 0.5mm, 0.6mm, 0.7mm, 0.8mm, 0.9mm, 1.0mm, or other values not specified. The thickness of the cover plate 110 is reasonably set so that the first sub-groove 121 and the second sub-groove 122 can be machined while the strength of the cover plate 110 is ensured, thereby realizing pressure relief at two times.

In some embodiments, on the basis of the first configuration, referring to FIG. 3, the arc length of the first sub-groove 121 is smaller than the arc length of the second sub-groove 122. The arc length of the first sub-groove 121 refers to a length of a circular arc where an outer edge of the part, in which the first sub-groove 121 is located, of the explosion-proof groove 120 is located. The arc length of the second sub-groove 122 refers to a length of a circular arc where the outer edge of the part, in which the second sub-groove 122 is located, of the explosion-proof groove 120 is located.

In some embodiments, on the basis of the first configuration, referring to FIG. 3, the ratio of the arc length of the first sub-groove 121 to the arc length of the second sub-groove 122 is denoted by G, and satisfies $\frac{1}{20}<G\leq\frac{1}{7}$. The value of the ration G may be $\frac{1}{20}$, $\frac{1}{19}$, $\frac{1}{18}$, $\frac{1}{17}$, $\frac{1}{16}$, $\frac{1}{15}$, $\frac{1}{14}$, $\frac{1}{13}$, $\frac{1}{12}$, $\frac{1}{11}$, $\frac{1}{10}$, $\frac{1}{9}$, $\frac{1}{8}$, $\frac{1}{7}$ or other values not listed. The arc length of the first sub-groove 121 and the arc length of the second sub-groove 122 are reasonably arranged, and the opening size of the primary pressure relief and the opening size of the secondary pressure relief are reasonably arranged to ensure the explosion-proof effect.

In some embodiments, referring to FIGS. 8 and 17, the notch width of the explosion-proof groove 120 is denoted by a, and satisfies 0.6mm≤a≤1.5mm. The value of the notch width a may be 0.6mm, 0.7mm, 0.8mm, 0.9mm, 1.0mm, 1.1mm, 1.2mm, 1.3mm, 1.4mm, 1.5mm, or other values not specified. The notch width of the explosion-proof groove 120 is reasonably set to prevent the notch width of the explosion-proof groove 120 from being too small to conducive to processing and opening. Further, it can prevent the notch width of the explosion-proof groove 120 from being too large to increase the area of the explosion-proof groove 120, and affect the structural strength of the cover plate 110.

In some embodiments, referring to FIGS. 1 and 14, in the second configuration and the fourth configuration, the outer diameter of the annular shape in which the second sub-groove 122 is located is denoted by E1, and satisfies 24mm≤E1≤40mm, such as 30mm≤E1≤35mm. The value of the outer diameter E1 may be 24mm, 25 mm, 26mm, 27mm, 28mm, 29mm, 30mm, 31mm, 32mm, 33mm, 34mm, 35mm, 36mm, 37mm, 38mm, 39mm, 40mm, or other values not specified. The position of the explosion-proof groove 120 on the cover plate 110 is reasonably set to form a sufficiently large pressure relief area to ensure a pressure relief effect.

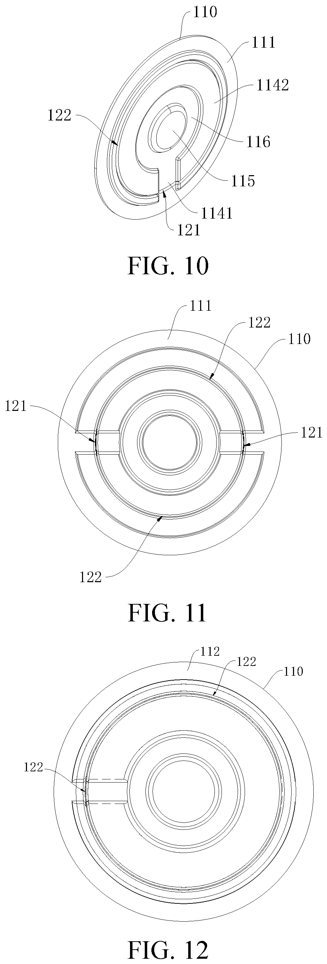

In some embodiments, referring to FIGS. 11 and 13, on the basis of the first configuration, the explosion-proof groove 120 includes a plurality of first sub-grooves 121 and a plurality of second sub-grooves 122. The first sub-grooves 121 and the second sub-grooves 122 are alternately provided. The plurality of first sub-grooves 121 and the plurality of second sub-grooves 122 are located on the same circle. The projections of the plurality of first sub-grooves 121 and the projections of the plurality of second sub-grooves 122 on one side of the cover plate 110 enclose respective closed annular shapes.

It will be appreciated that in order to realize pressure relief at two times, parts of the cover plate 110 where all the first sub-grooves 121 are located are opened under the first pressure, and parts of the cover plate 110 where all the second sub-grooves 122 are located are opened under the second pressure. The first pressure is less than the second pressure. By providing the cover plate 110 with a plurality of first sub-grooves 121 and a plurality of second sub-grooves 122, the parts of the cover plate 110 where the explosion-proof grooves 120 are located are facilitated to be fully opened, thereby ensuring the pressure relief area and the pressure relief effect.

In some embodiments, referring to FIGS. 2 and 18, the cover plate 110 includes a first sub-portion 113 adjacent to the edge of the cover plate 110 and a second sub-portion 114. The first sub-portion 113 is adjacently connected to the second sub-portion 114. A surface of the second sub-portion 114 which faces towards the core 140 is at least partially higher than a surface of the first sub-portion 113 which faces towards the core 140. A surface of the second sub-portion 114 which is away from the core 140 is at least partially higher than a surface of the first sub-portion 113 which is away from the core 140. The explosion-proof groove 120 is disposed on the second sub-portion 114.

It will be appreciated that the cover plate 110 is designed in a concave-convex configuration, and is hemispherical or cap-shaped when the cover plate 110 is deformed, thereby increasing the space between the cover plate 110 and the end of the core 140, and preventing the air pressure inside the battery from increasing rapidly to cause the explosion of the battery.

On the basis of the above-described embodiments, referring to FIGS. 2 and 18, the cover plate 110 includes a third sub-portion 115. The first sub-portion 113, the second sub-portion 114, and the third sub-portion 115 are concentric in sequence in the radial direction of the cover plate 110. The first sub-portion 113 and the second sub-portion 114 are annular, and the third sub-portion 115 is circular. The first sub-portion 113 is close to the edge of the cover plate 110. In a direction from the second side 112 to the first side 111, the surface of the second sub-portion 114 which faces towards the core 140 is at least partially higher than the surface of the first sub-portion 113 which faces towards the core 140; and the surface of the second sub-portion 114 which is away from the core 140 is at least partially higher than the surface of the first sub-portion 113 which is away from the core 140. The explosion-proof groove 120 is provided on the second sub-portion 114, and the first sub-groove 121 and the second sub-groove 122 are concentric with the second sub-portion 114.

It will be appreciated that when the air pressure in the battery is increased, the cover plate 110 is bulged and deformed towards the first side 111, so the heights of the second sub-portion 114 and the third sub-portion 115 are designed to be higher than the height of the first sub-portion 113, so as to enable the cover plate 110 to be deformed as a hemispherical shape or a hat shape, thereby increasing the space between the cover plate 110 and the end portion of the core 140, and preventing the air pressure in the battery from increasing sharply to cause the explosion of the battery.

In some embodiments, referring to FIGS. 2 and 18, the cover plate 110 further includes a fourth sub-portion 116. The fourth sub-portion 116 is annular. The fourth sub-portion 116 is located between the second sub-portion 114 and the third sub-portion 115, and the fourth sub-portion 116 connects the second sub-portion 114 and the third sub-portion 115.

It will be appreciated that the explosion-proof groove 120 is provided on the second sub-portion 114, and the deformation forces of both the first sub-portion 113 and the fourth sub-portion 116 act on the explosion-proof groove 120 during the deformation of the cover plate 110, thereby facilitating smooth opening of the explosion-proof groove 120 and ensuring reliability of the explosion-proof structure.

In other embodiments, on the first side 111, the height of the third sub-portion 115 is higher than the height of the second sub-portion 114, the height of the second sub-portion 114 is partially higher than the height of the first sub-portion 113, and the first sub-portion 113 is higher than the fourth sub-portion 116. On the second side 112, the fourth sub-portion 116 is lower than the first sub-portion 113, the first sub-portion 113 is lower than at least part of the second sub-portion 114, and the second sub-portion 114 is lower than the third sub-portion 115.

It will be appreciated that when the cover plate 110 is installed on the battery for use, the fourth sub-portion 116 of the cover plate 110 is connected to the electrode of the battery, and the cover plate 110 is charged. For the battery, the potential between the cover plate 110 and the housing 150 of the battery is the same, and there is no potential difference, thereby reducing the risk of corrosion of the cover plate 110, and improving the reliability of the battery pack.

In some embodiments, as shown in FIGS. 8 and 19, the distance between the first side 111 of the second sub-portion 114 and the first side 111 of the first sub-portion 113 is denoted by B, and satisfies 0.8C≤B≤1.5C, where C represents the thickness of an area of the cover plate 110 which excludes the explosion-proof groove 120. For example, the value of the distance B may be 0.8C, 0.9C, 1.0C, 1.1C, 1.2C, 1.3C, 1.4C, 1.5C, or other values not specified.

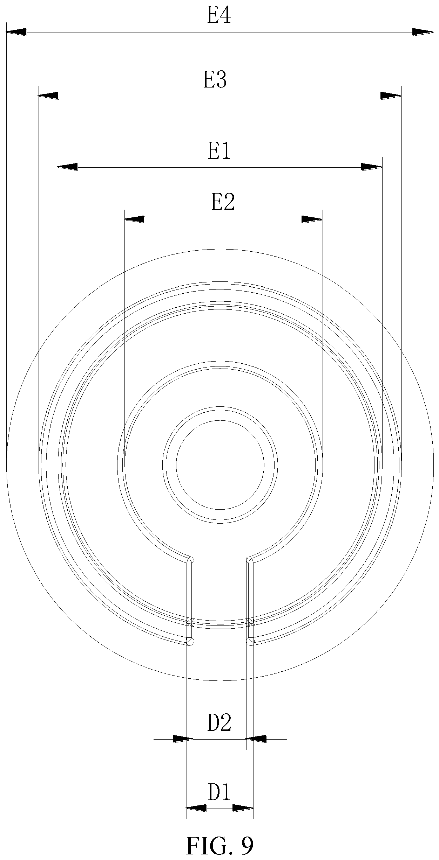

In some embodiments, referring to FIG. 9, based on the first configuration, the outer diameter of the annular shape in which the second sub-groove 122 is located is denoted by E1, the inner diameter of the second sub-portion 114 is denoted by E2, the outer diameter of the second sub-portion 114 is denoted by E3, and the diameter of the cover plate 110 is denoted by E4 and satisfies $42mm \leq E4 \leq 46mm$. For example, the value of the diameter E4 may be 42mm, 43mm, 44mm, 45mm, 46mm, or other values not specified. The outer diameter E3 satisfies $0.75E4 \leq E3 \leq 0.96E4$, and the inner diameter E2 satisfies $0.4E4 \leq E2 \leq 0.72E4$. A difference between the outer diameter E3 and the inner diameter E2 is denoted by E3-E2, and satisfies $3C \leq E3-E2 \leq 27.8C$. The outer diameter E1 satisfies $E2+C < E1 < E3-C$, where C denotes the thickness of the area of the cover plate 110 which excludes the explosion-proof groove 120.

It will be appreciated that the dimensions of the diameter E4 of the cover plate 110 in the embodiments of the present application are associated with the corresponding battery product specifications, the dimensions of the inner diameter E2 and the outer diameter E3 are associated with the diameter E4, the dimension of the outer diameter E1 are associated with the inner diameter E2 and the outer diameter E3, and the structural dimensions of the cover plate 110 are reasonably designed. The structure and the parameters of the first sub-portion 113, the second sub-portion 114, the third sub-portion 115, and the fourth sub-portion 116 are reasonably set, so that the primary pressure relief and the secondary pressure relief of the cover plate 110 are realized while the strength of the cover plate 110 and the size of the space after the cover plate 110 is deformed are ensured, thereby facilitating the processing of the explosion-proof groove 120.

In some embodiments, referring to FIGS. 3, 5, 10, 21, and 22, the second sub-portion 114 includes a concave platform 1141 and a convex platform 1142 that are connected. A surface of the convex platform 1142 which faces towards the core 140 is higher than a surface of the concave platform 1141 which faces towards the core 140 and a surface of the first sub-portion 113 which faces towards the core 140. A surface of the convex platform 1142 which faces away from the core 140 is higher than a surface of the concave platform 1141 which faces away from the core 140 and a surface of a first sub-portion 113 which faces away from the core 140. The first sub-groove 121 is disposed at least partially on the concave platform 1141, and the second sub-groove 122 is disposed at least partially on the convex platform 1142. In the direction from the second side 112 to the first side 111, the concave platform 1141 and the first sub-portion 113 are located at the same height. That is, the first side 111 of the concave platform 1141 and the first side 111 of the first sub-portion 113 are located in the same horizontal plane; and the second side 112 of the concave platform 1141 and the second side 112 of the first sub-portion 113 are located in the same horizontal plane. The convex platform 1142 is disposed higher than the concave platform 1141, the first side 111 of the convex platform 1142 is disposed higher than the first side 111 of the concave platform 1141, and the second side 112 of the convex platform 1142 is disposed higher than the second side of the concave platform 1141. The first sub-groove 121 is disposed at least partially on the concave platform 1141, and the second sub-groove 122 is disposed at least partially on the convex platform 1142.

It will be appreciated that by forming the concave platform 1141 and the convex platform 1142 on the second sub-portion 114, the first sub-groove 121 is at least partially provided on the concave platform 1141, and the second sub-groove 122 is provided on the convex platform 1142. The first sub-groove 121 at the concave platform 1141 is subjected to the force of the deformation of the cover plate 110 when the air pressure inside the battery is increased and the cover plate 110 is deformed, so that the directional opening at the first sub-groove 121 is realized, thereby ensuring that the pressure relief at two times is orderly performed. The directional opening at the first sub-groove 121 includes following two cases. The first sub-groove 121 is fully opened in a moment under the first pressure; alternatively, the first sub-groove 121 has an opening point from which the first sub-groove 121 is opened to be fully opened. As shown in FIG. 3, the opening point is the junction of the convex platform 1142 and the concave platform 1141 on the first sub-groove 121, or may be any position on the first sub-groove 121 in the region of the concave platform 1141. As shown in FIGS. 18 and 21, the opening point is the junction of the convex platform 1142 and the concave platform 1141 on the first sub-groove 121; or the opening point is any position on the third section 1117 of the first sub-groove 121; or the opening point is any position on the first section 1111 and the second section 1112 of the first sub-groove 121 in the region of the concave platform 1141.

On the basis of the above-described embodiments, the surface of the third sub-portion 115 which faces towards the core 140 is not lower than the surface of the convex platform 1142 which faces towards the core 140, and the surface of the third sub-portion 115 which is away from the core 140 is not lower than the surface of the convex platform 1142 which is away from the core 140. The space after deformation of the cover plate 110 can be increased as much as possible.

On the basis of the above-described embodiments, the surface of the first sub-portion 113 which faces towards the core 140 is higher than the surface of the fourth sub-portion 116 which faces towards the core 140, and the fourth sub-portion 116 is used for connection with the electrode of the battery. When the cover plate 110 is installed on the battery for use, the fourth sub-portion 116 of the cover plate 110 is connected to the electrode of the battery, and the cover plate 110 is charged. For the battery, the potential between the cover plate 110 and the housing 150 of the battery is the same, and there is no potential difference, thereby reducing the risk of corrosion of the cover plate 110, and improving the reliability of the battery pack. In addition, the surface of the first sub-portion 113 which is away from the core 140 is higher than the surface of the fourth sub-portion 116 which is away from the core 140.

On the basis of the above-described embodiments, the surface of the first sub-portion 113 which faces towards the core 140, the surface of the fourth sub-portion 116 which faces towards the core 140, and the surface of the concave platform 1141 which faces towards the core 140 are at the same height. In addition, the surface of the first sub-portion 113 which is away from the core 140, the surface of the fourth sub-portion 116 which is away from the core 140, and the surface of the concave platform 1141 which faces towards the core 140 are located at the same height so as to facilitate processing and molding of the cover plate 110.

In some embodiments, referring to FIGS. 4 and 22, the depth of the concave platform 1141 is denoted by A, and satisfies $0.8C \leq A \leq 1.5C$, where C denotes the thickness of the area of the cover plate 110 which excludes the explosion-proof groove 120. For example, the depth A of the concave platform 1141 satisfies $1C \leq A \leq 1.3C$, and may be 0.8C, 0.9C, 1.0C, 1.1C, 1.2C, 1.3C, 1.4C, 1.5C, or other values not specified. The depth of the concave platform 1141 refers to the perpendicular distance between the first side 111 of the convex platform 1142 and the first side 111 of the concave platform 1141.

In some embodiments, as shown in FIGS. 9 and 23, the width of the top of the concave platform 1141 is denoted by D1, and the width of the bottom of the concave platform 1141 is denoted by D2, in which:

the width D1 of the top of the concave platform 1141 satisfies $4mm \leq D1 \leq 12mm$;

the width D2 of the bottom of the concave platform 1141 satisfies $D2=D1-2C*\tan(\alpha-90°)$, and $D2>2mm$;

where $\alpha$ denotes an included angle formed between the bottom and the side of the concave platform 1141, and satisfies $100° \leq \alpha \leq 170°$;

C denotes the thickness of the area of the cover plate 110 which excludes the explosion-proof groove 120.

The value of the width D1 may be 4mm, 5mm, 6mm, 7mm, 8mm, 9mm, 10mm, 11mm, 12 mm or other values not specified, and the value of the included angle $\alpha$ may be 100°, 110°, 120°, 130°, 140°, 150°, 160°, 170° or other values not specified. The size of the concave platform 1141 is reasonably set to ensure the effect of directional opening of the explosion-proof structure.

In some embodiments, referring to FIG. 12, the cover plate 110 includes first and second sides 111 and 112 oppositely disposed, the first and second sub-grooves 121 and 122 are each disposed on the second side 112, and the first sub-groove 121 communicates with the second sub-groove 122.

It will be appreciated that the explosion-proof groove 120 is provided on the side of the cover plate 110 which is adjacent to the core, which facilitates the opening of the explosion-proof groove 120 and ensures the explosion-proof effect.

In some embodiments, the cover plate 110 includes the first side 111 and the second side 112 oppositely disposed, the first sub-groove 121 is disposed on first side 111, and the second sub-groove 122 is disposed on second side 112.

As a variant, the cover plate 110 includes first and second sides 111 and 112 oppositely disposed, the second sub-groove 122 is disposed on the first side 111, and the first sub-groove 121 is disposed on the second side 112.

It will be appreciated that the first sub-groove 121 and the second sub-groove 122 may be provided on both sides of the cover plate 110 in a non-coplanar manner to facilitate processing.

In some embodiments, on the basis of the first configuration and the second configuration, the thickness H2 of the cover plate 110 at the second sub-groove 122 is calculated according to the following equation (1):

$$H2 = \frac{P2*E1}{4Q}; \qquad\qquad (1)$$

where Q denotes the tensile strength of the material for manufacturing the cover plate 110;

E1 denotes the outer diameter of the annular shape in which the second sub-groove 122 is located;

P2 denotes the opening pressure of the cover plate 110 at the second sub-groove 122.

In some embodiments, on the basis of the first configuration, the thickness H1 of the cover plate 110 at the first sub-groove 121 is calculated according to the following equation (2):

$$H1 = \frac{P1 * E1}{4Q};\qquad\qquad(2)$$

where Q denotes the tensile strength of the material for manufacturing the cover plate 110;

E1 denotes the outer diameter of the annular shape in which the second sub-groove 122 is located, and the outer diameters of the first sub-groove 121 and the second sub-groove 122 are the same;

P1 denotes the opening pressure of the cover plate 110 at the first sub-groove 121.

The thickness H1 of the cover plate 110 at the first sub-groove 121 and the thickness H2 of the cover plate 110 at the second sub-groove 122 are calculated by using the above equations (1) and (2). The first sub-groove 121 and the second sub-groove 122 are designed according to different positions and material characteristics, so that the design is convenient, and the calculation results are accurate, thereby ensuring the performance of the cover plate 110.

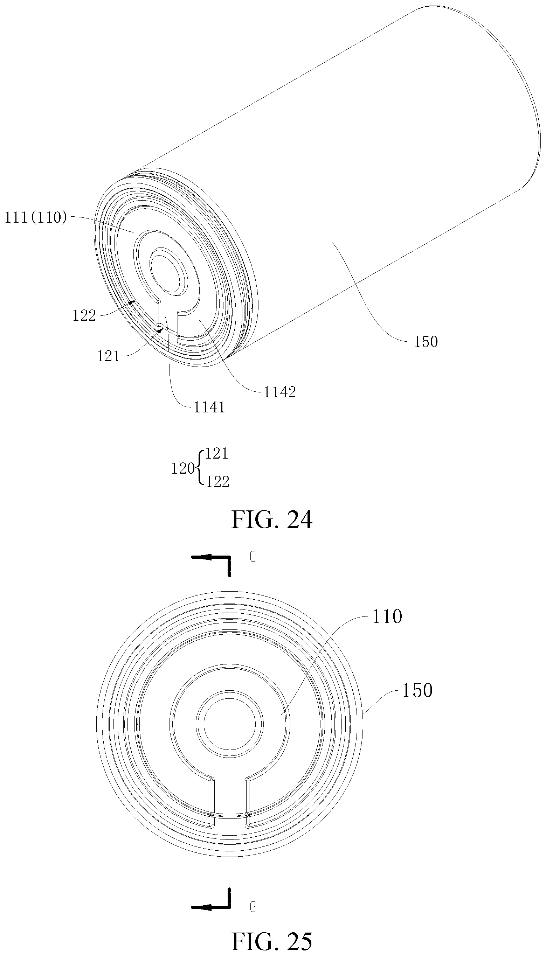

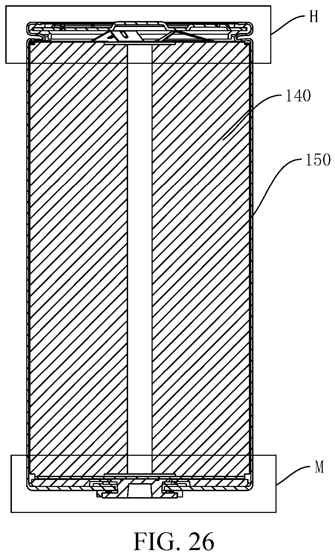

Referring to FIG. 24, FIG. 25, FIG. 26, FIG. 27, and FIG. 28, embodiments of the present application further provide a battery. A battery 100 may be a cylindrical battery, and an explosion-proof structure may be applied to the positive electrode side or the negative electrode side of the battery. An example in which the explosion-proof structure is applied to the negative electrode side of the battery is described. The battery includes the above-described explosion-proof structure, a core 140, and a housing 150. The core 140 is mounted in the housing 150. One end of the housing 150 is provided with an opening 151, and a cover plate 110 is sealingly connected to the housing 150 to block the opening 151. The battery has the same technical effect as the battery explosion-proof structure and will not be described again.

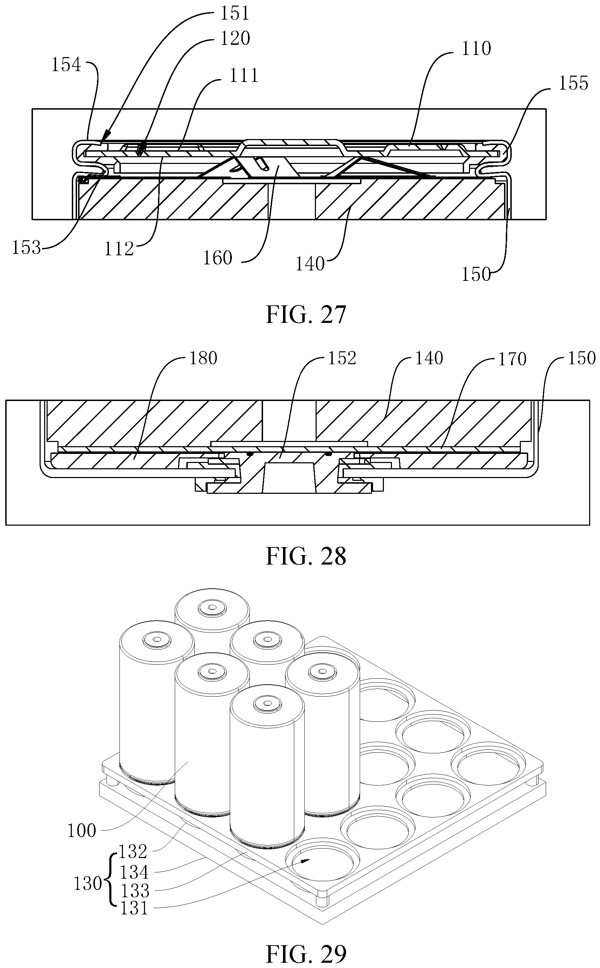

On the basis of the above-described embodiments, referring to FIGS. 27 and 28, the battery further includes a first current collector plate 160, a second current collector plate 170, and an insulator 180. The other end of the housing 150 is provided with a positive terminal 152. A core 140, the first current collector plate 160, and the second current collector plate 170 are all disposed in the housing 150. The cover plate 110 is sealingly connected to the housing 150 and seals the opening 151. The second side 112 of the cover plate 110 abuts against one side of the first current collector plate 160, the other side of the first current collector plate 160 is welded to the negative terminal of the core 140. The circumferential side of the first current collector plate 160 is connected to the inner surface of the housing 150 so that the housing 150 is charged. There is no potential difference between the cover plate 110 and the housing 150, so the risk of corrosion of the cover plate 110 is reduced, and the reliability of the battery is improved. The end of the housing 150 which is away from the cover plate 110 is provided with a positive terminal 152. The positive terminal 152 is sealingly connected to the housing 150 through an insulating seal ring. The second current collector plate 170 is welded to the core 140 and the positive terminal 152, and is provided between the positive end of the core 140 and the positive terminal 152. In addition, an insulator 180 is provided between the second current collector plate 170 and the end of the housing 150. The second current collector plate 170 and the housing 150 are insulated by the insulator 180. The first side 111 is a surface of the cover plate 110 which faces away from the core 140, and the second side 112 is a surface of the cover plate 110 which faces towards the core 140.

In some embodiments, the area of the outer circle formed by the explosion-proof groove 120 on the cover plate 110 is denoted by φ1. The area φ1 of the outer circle refers to an area calculated by the outer diameter of the annular shape formed by the explosion-proof groove 120 on the cover plate 110; and the sectional area of the housing 150 is denoted by φ2 in a direction perpendicular to the axis of the housing 150, in which

$$0.27 \leq \frac{\varphi1}{\varphi2} \leq 0.76$$

It will be appreciated that the value of $\frac{\varphi1}{\varphi2}$ may be 0.27, 0.3, 0.4, 0.5, 0.6, 0.76 or other values not specified. The ratio of the area φ1 to the sectional area φ2 is reasonably set to ensure the pressure relief effect of the explosion-proof structure.

In some embodiments, a portion, which is adjacent to the opening 151, of the side wall of the housing 150 is constricted to form the flange 153. The opening 151 of the housing 150 is provided with a press plate 154. The press plate 154 and the flange 153 are oppositely arranged and spaced apart. The cover plate 110 is mounted between the flange 153 and the press plate 154. A sealing member 155 is provided between the cover plate 110 and the flange 153, as well as the cover plate 110 and the press plate 154. The sealing member 155 is a sealing ring, and a range of the compression ratio of the sealing ring is 30%~70%, so that the sealing property of the cover plate 110 is ensured, and the pressure relief effect of the explosion-proof structure is improved.

In other embodiments, the cover plate 110 is connected to the housing 150 by laser welding. The processing of the laser welding is simple, and the sealing property is good. At this time, the first current collector plate 160 is in direct contact with the housing 150, and may also be in direct contact with the cover plate 110, so that the housing 150 is negatively charged.

The present application also provides a battery pack including the battery 100 described above. The battery pack has the same technical effect as the explosion-proof structure of the battery and will not be described again.

In some embodiments, referring to FIGS. 29, 30, and 31, the battery pack further includes a mounting seat 130 provided with a plurality of mounting slots 131 and a plurality of baffles 132. The batteries, the mounting slots 131, and the baffles 132 are arranged in one-to-one correspondence. One end of the battery 100 which is adjacent to the cover plate 110 is mounted in the mounting slot 131, and the baffle 132 is located on one side of the mounting slot 131 which faces away from the battery 100. The first sub-groove 121 includes a first wall 1211 and a second wall 1212. The second wall 1212 is disposed more adjacent to the center of the cover plate 110 than the first wall 1211. The projection of the baffle 132 on one side of the cover plate 110 is located on one side of the first wall 1211 which faces away from the second wall 1212. The baffle 132 may be a flat plate or an arc-shaped plate.

It will be appreciated that, as the pressure in the battery 100 increases, the first sub-groove 121 in the concave platform 1141 is opened, and the gas and the substance in the battery 100 are discharged from the side where the first sub-groove 121 is located. By providing the baffles 132 on the mounting seat 130, the baffles 132 are positioned below the concave platform 1141, the projections of the baffles 132 on the plane in which the cover plate 110 is located are each positioned in alignment with the first sub-groove 121, and the blocking areas of the baffles 132 are larger. So, the baffles 132 block the substance discharged from the battery 100, thereby preventing the discharge of the substance into an adjacent battery 100 to contaminate the adjacent battery 100.

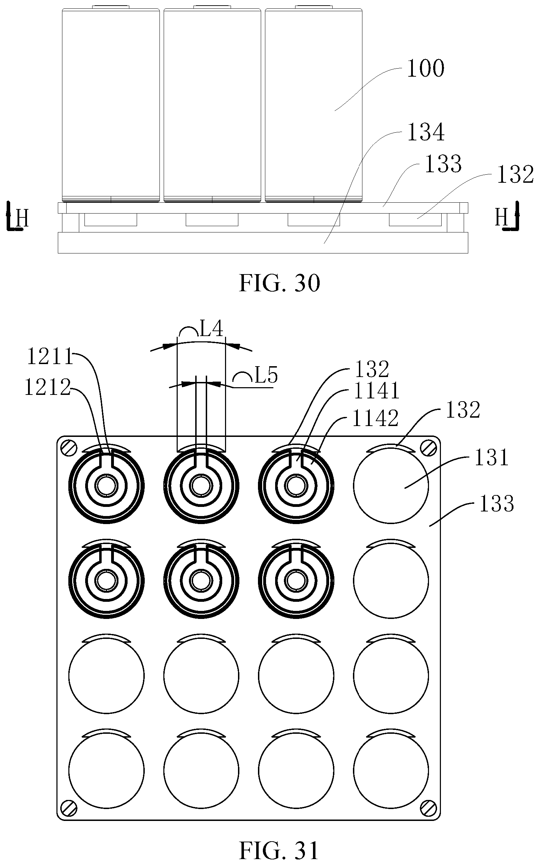

As can be seen from FIG. 31, the baffle 132 is an arc plate, the arc length of the baffle 132 is denoted by L4, and the arc length of the region in which the first sub-groove 121 is located is denoted by L5. The arc length L4 of the baffle 132 is greater than or equal to the arc length L5, so that the baffle 132 has a larger blocking area, and the blocking effect is better.

On the basis of the above-described embodiments, referring to FIG. 15, the mounting seat 130 includes a first sub-board 133 and a second sub-board 134. The first sub-board 133 and the second sub-board 134 are oppositely arranged and spaced apart in the thickness direction of the mounting seat 130. The first sub-board 133 is connected to the second sub-board 134. The mounting slots 131 are provided on the first sub-board 133, and the baffles 132 are located between the first sub-board 133 and the second sub-board 134. The baffles 132 are connected to the first sub-board 133. The material flowing out after the cover plate 110 after opening flows between the first sub-plate 133 and the second sub-plate 134 to avoid affecting other batteries.

The technical solutions and the effects of the present application will be described in detail by means of specific examples and comparative examples. The following examples are merely partial examples of the present application, and do not specifically limit the present application.

The present embodiment is intended to test the effect of application of an explosion-proof structure to a battery on the performance of the battery.

First test group

The explosion-proof structure of the present test group is as follows. As shown in FIG. 1, the cover plate 110 includes first and second sides 111 and 112 oppositely disposed. Each of the first and second sub-grooves 121 and 122 is disposed on the first side 111, and each of the first and second sub-grooves 121 and 122 is an arc-shaped annular shape. The first sub-groove 121 and the second sub-groove 122 are connected end to end with each other. The first sub-groove 121 is in communication with the second sub-groove 122. The projections of the first sub-groove 121 and the second sub-groove 122 on one side of the cover plate 110 are arc-shaped. Parameters of the cover plate 110 are related to the thicknesses H1 and H2, the difference H2-H1, the notch width a, the thickness C, the ratio G, as well as the outer diameter E1.

Test method: Article 6.2.4 of the GB/T31485-2015 standard was adopted.

The evaluation criterion: the opening time of the first sub-groove 121 is denoted by T1, the opening time of the second sub-groove 122 is denoted by T2, and a difference between the opening time of the first sub-groove 121 and the opening time of the second sub-groove 122 is denoted by $\Delta T$. The opening time T1 and the opening time T2 satisfy the following conditions: 50second(s)$\leq$T1$\leq$100s, 60s$\leq$T2$\leq$150s, 5s$\leq\Delta T\leq$50s.

Basic group 1 is set, and parameters and verification results of the basic group 1 are shown in Table 1.1 below.

Table 1.1: Parameters and Validation Results of Basic Group 1

| | H1 /$\mu$m | H2 /$\mu$m | (H2-H1) /$\mu$m | a/mm | C/mm | G | E1/mm |
|---|---|---|---|---|---|---|---|
| Basic group 1 | 115.0 | 120.0 | 5.0 | 0.6 | 0.4 | 1/20 | 24.0 |
| Verification result | T1=95s, T2=120s, $\Delta T$=25s | | | | | | |

As can be seen from the verification results in Table 1.1, the opening time of the first sub-groove 121 and the opening time of the second sub-groove 122 meet the evaluation criteria, and thus it can realize the pressure relief at two times while the performance of the explosion-proof structure is ensured.

On the basis of the parameters of the basic group 1, the parameter variation of the cover plate 110 is controlled by a single variable method to set the comparative examples and the implementing examples, and the variation parameter tables and verification results of the comparative examples and the implementing examples are shown in Tables 1.2 to 1.5.

Table 1.2: Validation Results of Comparative Examples and Implementing Examples on the basis of Parameters of Basic Group 1 and changing Thickness H2 along with Change of Thickness H1

|  | H1/μm | H2/μm | Verification result |
| --- | --- | --- | --- |
| Implementing Example 1 | 20.0 | 25.0 | T1=60s, T2=65s, ΔT=5s |
| Implementing Example 2 | 67.0 | 72.0 | T1=75s, T2= 90s, ΔT=15s |
| Comparative Example 1 | 15.0 | 20.0 | T1=55s, T2=59s, ΔT=4s |
| Comparative Example 2 | 120.0 | 125.0 | T1=118s, T2=122s, ΔT=4s |

According to Table 1.2, it can be seen that when the thickness H1 is within the set range, the performance of the explosion-proof structure is ensured, and the pressure relief at two times is realized. When the thickness H1 is not within the set range, the time interval between the pressure relief at two times is shorter. So, the effect of the pressure relief of the explosion-proof structure at two times is reduced.

Table 1.3: Validation Results of Comparative Examples and Implementing Examples on the basis of Parameters of Basic Group 1 and changing Difference H2-H1 along with Change of Thickness H2

|  | H2/μm | H2-H1/μm | Verification result |
| --- | --- | --- | --- |
| Implementing Example 1 | 125.0 | 10.0 | T1=95s, T2=125s, ΔT=30s |
| Implementing Example 2 | 135.0 | 20.0 | T1=95s, T2=143s, ΔT=48s |
| Comparative Example 1 | 117.0 | 2.0 | T1=95s, T2=98s, ΔT=3s |
| Comparative Example 2 | 140.0 | 25.0 | T1=95s, T2>150s, ΔT>45s |

As can be seen from Table 1.3, when the thickness H2 and the difference H2-H1 are within a set range, the performance of the explosion-proof structure is ensured, and the pressure relief at two times is realized. When the difference H2-H1 is lower than the set range, the time interval between the pressure relief at two times is relatively short. When the difference H2-H1 is higher than the set range, the time interval between the pressure relief at two times is relatively long or the opening time of the second sub-groove 122 is relatively later. So, the effect of the pressure relief of the explosion-proof structure at two times is reduced.

Table 1.4: Validation Results of Comparative Examples and Implementing Examples on the basis of Parameters of Basic Group 1 and Change of Ratio G

|  | G | Verification result |
| --- | --- | --- |
| Implementing Example 1 | 1/10 | T1=95s, T2=127s, ΔT=32s |
| Implementing Example 2 | 1/7 | T1=95s, T2=136s, ΔT=41s |
| Comparative Example 1 | 115 | T1=96s, T2=150s, ΔT=54s |
| Comparative Example 2 | 1/22 | T1=95s, T2=98s, ΔT=3s |

It can be seen from Table 1.4 that when the ratio G is within the set range, the pressure relief at two times is realized while the performance of the explosion-proof structure is ensured. When the ratio G is lower than the set range, the time interval between the pressure relief at two times is relatively long. When the ratio G is higher than the set range, the time interval between the pressure relief at two times is relatively short. So, the effect of the pressure relief of the explosion-proof structure at two times is reduced.

Table 1.5: Validation Results of Comparative Examples and Implementing Examples on the basis of Parameters of
Basic Group 1 and Change of Outer Diameter E1.

|  | E1/mm | Verification result |
|---|---|---|
| Implementing Example 1 | 32.0 | T1=87s, T2=116s, ΔT=29s |
| Implementing Example 2 | 40.0 | T1=78s, T2=110s, ΔT=32s |
| Comparative Example 1 | 20.0 | T1=100s, T2=156s, ΔT=56s |
| Comparative Example 2 | 45.0 | T1=50s, T2=105s, ΔT=56s |

It can be seen from Table 1.5 that when the outer diameter E1 is within the set range, the pressure relief at two times is realized while the performance of the explosion-proof structure is ensured. When the outer diameter E1 is lower or higher than the set range, the time interval between the pressure relief at two times is longer, and the effect of the pressure relief of the explosion-proof structure at two times is reduced.

Second test group

The explosion-proof structure of the present test group is as follows. As shown in FIG. 2, the cover plate 110 includes first and second sides 111 and 112 oppositely disposed. Each of the first and second sub-grooves 121 and 122 is disposed on the first side 111. Each of the first and second sub-grooves 121 and 122 is an arc-shaped annular shape. The first sub-groove 121 is end-to-end connected to the second sub-groove 122, and the first sub-groove 121 is in communication with the second sub-groove 122. The cover plate 110 includes a first sub-portion 113 adjacent to the edge of the cover plate 110, and a second sub-portion 114. The first sub-portion is adjacently connected to the second sub-groove 114. In a direction from the second side 112 to the first side 111, the second sub-portion 114 is higher than the first sub-portion 113, and the explosion-proof groove 120 is provided on the second sub-portion 114. The parameters of the cover plate 110 relate to the thicknesses H1 and H2, the difference H2-H1, the notch width a, the thickness C, the ratio G, the distance B, the outer diameter E1, the inner diameter E2, the outer diameter E3, and the diameter E4, as well as the difference E3-E2.

Test method: Article 6.2.4 of the GB/T31485-2015 standard was adopted.

The evaluation criterion: the opening time of the first sub-groove 121 is denoted by T1, and the opening time of the second sub-groove 122 is denoted by T2, in which the opening time T1 and the opening time T2 satisfy the following conditions: $50s \leq T1 \leq 100s$, $60 \leq T2 \leq 150s$, $5s \leq \Delta T \leq 50s$.

Basic group 2 is set, and the parameters and verification results of the basic group 2 are shown in Table 2.1 below.

Table 2.1: Parameters and Validation Results for Basic Group 2

| Parameter type | Value | Parameter type | Value | Verification result |
|---|---|---|---|---|
| H1/μm | 115.00 | B/mm | 0.32 | T1=89s, T2=127s, ΔT=38s |
| H2/μm | 120.00 | E1/mm | 26.00 | |
| (H2-H1)/μm | 5.00 | E2/mm | 25.00 | |
| a/mm | 0.60 | E3/mm | 31.50 | |
| C/mm | 0.40 | E4/mm | 42.00 | |
| G | 1/20 | (E3-E2)/mm | 6.50 | |

As can be seen from the verification results in Table 2.1, the opening time of the first sub-groove 121 and the opening time of the second sub-groove 122 meet the evaluation criteria, and the pressure relief at two times is realized while the performance of the explosion-proof structure is ensured.

According to the comparison between the verification result of the basic group 1 and the verification result of the basic group 2, it can be seen that when the explosion-proof groove 120 is provided on the second sub-portion 114, the interval difference between the pressure relief at two times is increased while the safety performance of the battery is ensured, and the effect of the pressure relief of the explosion-proof structure at two times is improved.

On the basis of the parameters of the basic group 2, the parameter variation of the cover plate 110 is controlled by a single variable method to set the comparative example and the implementing example, and the variation parameters and verification results of the comparative example and the implementing example are shown in Table 22 to Table 2.3.

Table 2.2: Verification results of Comparative Examples and Implementing Examples on the basis of Parameters of Basic Group 2 and Change of Distance B

|  | B/mm | Verification result |
|---|---|---|
| Implementing Example 1 | 0.48 | T1=86s, T2=129s, ΔT=43s |
| Implementing Example 2 | 0.60 | T1=84s, T2=123s, ΔT=39s |
| Comparative Example 1 | 0.20 | T1=94s, T2=97s, ΔT=3s |
| Comparative Example 2 | 1.00 | T1=78s, T2=81s, ΔT=3s |

As can be seen from Table 2.2, when the distance B is within the set range, the performance of the explosion-proof structure is ensured, and the pressure relief at two times is realized. When the distance B is below or above the set range, the time interval between the pressure relief at two times is shorter, and the effect of the pressure relief of the explosion-proof structure at two times is reduced.

Table 2.3: Verification results of Comparative Examples and Implementing Examples on the basis of Parameters of Basic Group 2 and Changes of Outer Diameter E1, Inner Diameter E2, and Outer Diameter E3

|  | E1/mm | E2/mm | E3/mm | E3-E2/mm | Verification result |
|---|---|---|---|---|---|
| Implementing Example 1 | 33.00 | 30.00 | 40.32 | 10.32 | T1=92s, T2=124s, ΔT=32s |
| Implementing Example 2 | 34.00 | 24.00 | 35.00 | 11.00 | T1=85s, T2=127s, ΔT=42s |
| Comparative Example 1 | 25.00 | 15.00 | 30.00 | 15.00 | T1=115s, T2=118s, ΔT=3s |
| Comparative Example 2 | 38.00 | 33.00 | 41.00 | 11.00 | T1=78s, T2=82s, ΔT=4s |

As can be seen from Table 2.3, when the outer diameter E1, the inner diameter E2, the outer diameter E3, and the difference E3-E2 are all within the set range, the performance of the explosion-proof structure is ensured, and the pressure relief at two times is realized. When the inner diameter E2 is not within the set range, the time interval between the pressure relief at two times is shorter, and the effect of the pressure relief of the explosion-proof structure at two times is reduced.

Third test group

The explosion-proof structure of the present test group is as follows. As shown in FIG. 3, the cover plate 110 includes first and second sides 111 and 112 oppositely disposed, each of the first and second sub-grooves 121 and 122 is disposed on the first side 111, and each of the first and second sub-grooves 121 and 122 is an arc-shaped annular shape. The first sub-groove 121 is end-to-end connected to the second sub-groove 122, and the first sub-groove 121 is in communication with the second sub-groove 122. The cover plate 110 includes a first sub-portion 113 adjacent to the edge of the cover plate 110 and a second sub-portion 114. The first sub-portion 113 is adjacently connected to the second sub-groove 114. In a direction from the second side 112 toward the first side 111, the surface of the second sub-portion 114 which faces toward the core 140 is at least partially higher than the surface of the first sub-portion 113 which faces toward the core 140, the surface of the second sub-portion 114 which is away from the core 140 is at least partially higher than the surface of the first sub-portion 113 which is away from the core 140, and the explosion-proof groove 120 is provided on the second sub-portion 114. The second sub-portion 114 includes a concave platform 1141 and a convex platform 1142 connected, and the concave platform 1141 and the convex platform 1142 enclose a closed annular shape. The surface of the convex platform 1142 which faces toward the core 140 is higher than the surface of the concave platform 1141 which faces toward the core 140 and the surface of the first sub-portion 113 which faces toward the core 140; and the surface of the convex platform 1142 which faces away from the core 140 is higher than the surface of the concave platform 1141 which faces away from the core 140 and the surface of the first sub-portion 113 which faces away from the core 140. The first sub-groove 121 is at least partially disposed on the concave platform 1141, and the second sub-groove 122 is at least partially disposed on the convex platform 1142. The parameters of the cover plate 110 relate to the thicknesses H1 and H2, the difference H2-H1, the notch width a, the thickness C, the ratio G, the depth A, the outer diameter E1, the inner diameter E2, the outer diameter E3, the diameter E4, the difference E3-E2, the widths D1 and D2 as well as the included angle α.

Test method: Article 6.2.4 of the GB/T31485-2015 standard was adopted.

The evaluation criterion: the opening time of the first sub-groove 121 is denoted by T1, and the opening time of the second sub-groove 122 is denoted by T2, in which the opening time T1 and the opening time T2 satisfy the following conditions: 50s≤T1≤100s, 60s≤T2≤150s, 15s≤ΔT≤50s.

Basic group 3 is set, and parameters and verification results of basic group 3 are shown in Table 3.1 below.

Table 3.1: Parameters of Basic Group 3

| Parameter type | Value | Parameter type | Value | Verification result |
|---|---|---|---|---|
| H1/$\mu$m | 115.00 | E1/mm | 26.00 | T1=80s, T2=123s, $\Delta$T=43s |
| H2/$\mu$m | 120.00 | E2/mm | 25.00 | |
| (H2-H1)/$\mu$m | 5.00 | E3/mm | 31.50 | |
| a/mm | 0.60 | E4/mm | 42.00 | |
| C/mm | 0.40 | (E3-E2)/mm | 6.50 | |
| G | 1/20 | D1/mm | 5.00 | |
| A/mm | 0.32 | D2/mm | 4.20 | |
| | | $\alpha$ | 135° | |

As can be seen from the verification results in Table 3.1, the opening time of the first sub-groove 121 and the opening time of the second sub-groove 122 meet the evaluation criteria, and the pressure relief at two times is realized while the performance of the explosion-proof structure is satisfied.

Based on comparison among the verification result of the basic group 1, the verification result of the basic group 2, and the verification result of the basic group 3, it can be seen that the second sub-portion 114 is provided with the concave platform 1141 and the convex platform 1142, thus on the premise of ensuring the safety performance of the battery, the time interval between the primary pressure relief and the secondary pressure relief is longer. In this way, the effect of the pressure relief at two times is good, and the reliability of the explosion-proof structure is further improved.

Based on the parameters of the basic group 3, the parameter variation of the cover plate 110 is controlled by a single variable method to set the comparative example and the implementing example. The variation parameters and verification results of the comparative example and the implementing example are shown in Table 3.2.

Table 3.2: Verification Results of Comparative Examples and Implementing Examples on the basis of Parameters of Basic Group 3 and changing Width D2 along with Change of Width D1

| | D1/mm | D2/mm | Verification result |
|---|---|---|---|
| Implementing Example 1 | 4.00 | 3.20 | T1=74s, T2=122s, $\Delta$T=48s |
| Implementing Example 2 | 12.00 | 11.20 | T1=97s, T2=126s, $\Delta$T=29s |
| Comparative Example 1 | 1.00 | 0.20 | T1=60s, T2=124s, $\Delta$T=64s |
| Comparative Example 2 | 18.00 | 17.20 | T1=100s, T2=104s, $\Delta$T=4s |

According to Table 3.2, when the width D1 is within the set range, the performance of the explosion-proof structure is ensured, and the pressure relief at two times is realized. When the width D1 is lower than the set range, the time interval between the pressure relief at two times is relatively long. When the width D1 is higher than the set range, the time interval between the pressure relief at two times is relatively short. So, the effect of the pressure relief of the explosion-proof structure at two times is reduced.

Fourth test group

The explosion-proof structure of the present test group is as follows. As shown in FIG. 14, the first side 111 of the cover plate 110 is provided with a first sub-groove 121 and a second sub-groove 122. The first sub-groove 121 includes a first section 1111, a second section 1112, and a third section 1117. The first section 1111, the second section 1112, and the third section 1117 are all arc-shaped, and the second sub-groove 122 is annular. In the radial direction of the cover plate 110, the first sub-groove 121 is disposed more adjacent to the center of the cover plate 110 than the second sub-groove 122.

Test method: Article 6.2.4 of the GB/T31485-2015 standard was adopted.

The evaluation criterion: the opening time of the first sub-groove 121 is denoted by T1, the opening time of the second sub-groove 122 is denoted by T2, and the difference between the opening time of the first sub-groove 121 and the opening time of the second sub-groove 122 is denoted by $\Delta$T, where the opening time T1 and the opening time T2 satisfy the following conditions: 50s≤T1≤100s, 60s≤T2≤150s, and time 5s≤$\Delta$T≤50s.

The parameters of the cover plate 110 relate to the thicknesses H1 and H2, the difference H2-H1, the notch width a, the thickness C, the outer diameter E1, the arc lengths L1, L2 and L3, as well as the included angle β, in which the arc length L1 and the arc length L2 are the same. The parameters of the basic group 4 are shown in Table 4.1 below.

Table 4.1: Parameters and Validation Results for Basic Group 4

| Parameter type | Value | Parameter type | Value | Verification result |
|---|---|---|---|---|
| H1/μm | 115.00 | E1/mm | 24.00 | T1=96s, T2=128s, ΔT=32s |
| H2/μm | 120.00 | L1/mm | 5.00 | |
| (H2-H1)/μm | 5.00 | L2/mm | 5.00 | |
| a/mm | 0.60 | L3/mm | 2.00 | |
| C/mm | 0.40 | β | 85° | |

As can be seen from the verification results in Table 4.1, the opening time of the first sub-groove 121 and the opening time of the second sub-groove 122 meet the evaluation criteria, and the pressure relief at two times is realized while the performance of the explosion-proof structure is satisfied.

On the basis of the parameters of the basic group 4, the parameter variation of the cover plate 110 is controlled by a single variable method to set the comparative examples and the implementing examples, and the variation parameter tables and verification results of the comparative examples and the implementing examples are shown in Tables 4.2 to 4.7.

Table 4.2: Validation Results of Comparison Examples and Implementing Examples on the basis of Parameters of Basic Group 4 and changing Thickness H2 along with Change of Thickness H1

| | H1/μm | H2/μm | Verification result |
|---|---|---|---|
| Implementing Example 1 | 20.00 | 25.00 | T1=50s, T2=60s, ΔT=10s |
| Implementing Example 2 | 67.00 | 72.00 | T1=76s, T2=87s, ΔT=11s |
| Comparative Example 1 | 15.00 | 20.00 | T1=43s, T2=48s, ΔT=5s |
| Comparative Example 2 | 120.00 | 125.00 | T1=126s, T2=130s, ΔT=4s |

It can be seen from Table 4.2 that when the thickness H1 is within the set range, the performance of the explosion-proof structure is ensured, and the pressure relief at two times is realized. When the thickness H1 is lower than the set range, the opening time of the primary pressure relief and the opening time the secondary pressure relief are all earlier. When the thickness H1 is higher than the set range, the time interval between the pressure relief at two times is shorter, and the effect of the pressure relief of the explosion-proof structure at two times is not good.

Table 4.3: Verification Results of Comparative Examples and Implementing Examples on the basis of Parameters of Basic Group 4 and changing Difference H2-H1 along with Change of Thickness H2

| | H2/μm | H2-H1/μm | Verification result |
|---|---|---|---|
| Implementing Example 1 | 125.00 | 10.00 | T1=96s, T2=132s, ΔT=36s |
| Implementing Example 2 | 135.00 | 20.00 | T1=96s, T2=139s, ΔT=43s |
| Comparative Example 1 | 117.00 | 2.00 | T1=97s, T2=101s, ΔT=4s |
| Comparative Example 2 | 140.00 | 25.00 | T1=95s, T2=153s, ΔT=58s |

It can be seen from Table 4.3 that when the difference H2-H1 is within the set range, the performance of the explosion-proof structure is ensured, and the pressure relief at two times is realized. When the difference H2-H1 is lower than the set range, the time interval between the pressure relief at two times is relatively short. When the difference H2-H1 is higher than the set range, the time interval between the pressure relief at two times is too long, so that the probability of causing a battery explosion is increased. So, the effect of the pressure relief of the explosion-proof structure at two times is reduced.

Table 4.4: Verification Results of Comparative Examples and Implementing Examples on the basis of Parameters of Basic Group 4 and Change of Arc Length L3

|  | L3/mm | Verification result |
| --- | --- | --- |
| Implementing Example 1 | 1.00 | T1=90s, T2=123s, ΔT=33s |
| Implementing Example 2 | 3.00 | T1=86s, T2=126s, ΔT=40s |
| Comparative Example 1 | 0.50 | T1=119s, T2=123s, ΔT=4s |
| Comparative Example 2 | 4.00 | T1=70s, T2=125s, ΔT=55s |

It can be seen from Table 4.4 that when the arc length L3 is within the set range, the pressure relief at two times is realized while the performance of the explosion-proof structure is ensured. When the arc length L3 is lower than the set range, the time interval between the pressure relief at two times is relatively short. When the arc length L3 is higher than the set range, the time interval between the pressure relief at two times is relatively long. So, the effect of the pressure relief of the explosion-proof structure at two times is reduced.

Table 4.5: Validation Results of Comparative Examples and Implementing Examples on the basis of Parameters of Basic Group 4 and Change of Arc Lengths L1 and L2

|  | L1 and L2/mm | Verification result |
| --- | --- | --- |
| Implementing Example 1 | 4.00 | T1=93s, T2=124s, ΔT=31s |
| Implementing Example 2 | 8.00 | T1=97s, T2=126s, ΔT=29s |
| Comparative Example 1 | 1.00 | T1=84s, T2=136s, ΔT=52s |
| Comparative Example 2 | 15.00 | T1=100s, T2=104s, ΔT=4s |

According to Table 4.5, it can be seen that when the arc lengths L1 and L2 are within the set range, the performance of the explosion-proof structure is ensured, and the pressure relief at two times is realized. When the arc lengths L1 and L2 are lower than the set range, the time interval between the pressure relief at two times is too long. When the arc lengths L1 and L2 are higher than the set range, the time interval between the pressure relief at two times is relatively short. So, the effect of the pressure relief of the explosion-proof structure at two times is reduced.

Table 4.6: Validation Results of Comparative Examples and Implementing Examples on the basis of Parameters of Basic Group 4 and Change of Included Angle β

|  | β | Verification result |
| --- | --- | --- |
| Implementing Example 1 | 30° | T1=100s, T2=127s, ΔT=27s |
| Implementing Example 2 | 150° | T1=93s, T2=122s, ΔT=29s |
| Comparative Example 1 | 20° | T1=111s, T2=114s, ΔT=3s |
| Comparative Example 2 | 170° | T1=76s, T2=132s, ΔT=56s |

As can be seen from Table 4.6, when the included angle β is within the set range, the performance of the explosion-proof structure is ensured, and the pressure relief at two times is realized. When the included angle β is lower than the set range, the time interval between the pressure relief at two times is relatively short. When the included angle β is higher than the set range, the time interval between the pressure relief at two times is relatively long. So, the effect of the pressure relief of the explosion-proof structure at two times is reduced.

Fifth test group

The explosion-proof structure of the present test group is as follows. As shown in FIG. 18, the first side 111 of the cover plate 110 is provided with a first sub-groove 121 and a second sub-groove 122. The first sub-groove 121 includes a first section 1111, a second section 1112, and a third section 1117. The first section 1111, the second section 1112, and the third section 1117 are all arc-shaped, and the second sub-groove 122 is annular. In the radial direction of the cover plate 110, the first sub-groove 121 is disposed more adjacent to the center of the cover plate 110 than the second sub-groove 122. The cover plate 110 includes a first sub-portion 113 and a second sub-portion 114. The surface of the second sub-portion 114 which is away from the core 140 is higher than the surface of the first sub-portion 113 which is away from the core 140. The surface of the second sub-portion 114 which faces toward the core 140 is higher than the surface of the first sub-portion 113 which faces toward the core 140. Both the first sub-groove 121 and the second sub-groove 122 are provided on the second sub-portion 114.

Test method: Article 6.2.4 of the GB/T31485-2015 standard was adopted.

The evaluation criterion: the opening time of the first sub-groove 121 is denoted by T1, the opening time of the second sub-groove 122 is denoted by T2, and the time interval between the opening time of the first sub-groove 121 and the opening time of the second sub-groove 122 is denoted by $\Delta T$, where the opening time T1 and the opening time T2 satisfy the following conditions: $50s \leq T1 \leq 100s$, $60s \leq T2 \leq 150s$, $5s \leq \Delta T \leq 50s$.

The parameters of the cover plate 110 relate to the thicknesses H1 and H2, the difference H2-H1, the notch width a, the thickness C, the arc lengths L1, L2 and L3, the included angle $\beta$, as well as the outer diameter E1. The basic group 5 is set, and the parameters and verification results of the basic group 5 are shown in Table 5.1.

Table 5.1: Parameters and Validation Results of Basic Group 5

| Parameter type | Value | Parameter type | Value | Verification result |
|---|---|---|---|---|
| H1/$\mu$m | 115.00 | L1/mm | 5.00 | T1=91s, T2=119s, $\Delta$T=28s |
| H2/$\mu$m | 120.00 | L2/mm | 5.00 | |
| (H2-H1)/$\mu$m | 5.00 | L3/mm | 2.00 | |
| a/mm | 0.60 | $\beta$ | 85° | |
| C/mm | 0.40 | B/mm | 0.32 | |
| | | E1/mm | 24.0 | |

As can be seen from the verification results in Table 5.1, the opening time of the first sub-groove 121 and the opening time of the second sub-groove 122 meet the evaluation criteria, and the pressure relief at two times is realized while the performance of the explosion-proof structure is ensured.

On the basis of the parameters of the basic group 5, the parameter variation of the cover plate 110 is controlled by a single variable method to set the comparative example and the implementing example. The variation parameters and verification results of the comparative example and the implementing example are shown in Table 5.2.

Table 5.2: Verification Results of Comparative Examples and Implementing Examples on the basis of Parameters of Basic Group 5 and Change of Distance B

| | B/mm | Verification result |
|---|---|---|
| Implementing Example 1 | 0.48 | T1=89s, T2=119s, $\Delta$T=30s |
| Implementing Example 2 | 0.60 | T1=87s, T2=121s, $\Delta$T=34s |
| Comparative Example 1 | 0.20 | T1=95s, T2=98s, $\Delta$T=3s |
| Comparative Example 2 | 1.00 | T1=68s, T2=125s, $\Delta$T=57s |

As can be seen from Table 5.2, when the distance B is within the set range, the purpose of the pressure relief at two times can be realized. When the distance B is below the set range, the time interval between the pressure relief at two times is relatively short. When the distance B exceeds the set range, the time interval between the pressure relief at two times is relatively long. So, the effect of the pressure relief of the explosion-proof structure at two times is reduced.

Sixth test group

The explosion-proof structure of the present test group is as follows: As shown in FIG. 12, the cover plate 110 includes first and second sides 111 and 112 oppositely disposed, each of the first and second sub-grooves 121 and 122 is disposed on the first side 111, and each of the first and second sub-grooves 121 and 122 is an arc-shaped annular shape. The first sub-groove 121 is end-to-end connected to the second sub-groove 122, and the first sub-groove 121 is in communication with the second sub-groove 122. The cover plate 110 includes a first sub-portion 113 adjacent to the edge of the cover plate 110 and a second sub-portion 114. The first sub-portion 113 is adjacently connected to the second sub-portion 114. In a direction from the second side 112 toward the first side 111, the surface of the second sub-portion 114 which is away from the core 140 is at least partially higher than the surface of the first sub-portion 113 which is away from the

**EP 4 579 896 A1**

core 140, the surface of the second sub-portion 114 which faces toward the core 140 is at least partially higher than the surface of the first sub-portion 113 which faces toward the core 140, and the explosion-proof groove 120 disposed on the second sub-portion 114. The second sub-portion 114 includes a concave platform 1141 and a convex platform 1142 connected. The concave platform 1141 and the convex platform 1142 are enclosed to be a closed annular shape. The second sub-portion 114 includes a concave platform 1141 and a convex platform 1142 connected, and the surface of the convex platform 1142 which faces towards the core 140 is higher than the surface of the concave platform 1141 which faces toward the core 140 and the surface of the first sub-portion 113 which faces towards the core 140. The surface of the convex platform 1142 which faces away from the core 140 is higher than the surface of the concave platform 1141 which faces away from the core 140 and the surface of the first sub-portion 113 which faces away from the core 140. The first sub-groove 121 is at least partially disposed on the concave platform 1141, and the second sub-groove 122 is at least partially disposed on the convex platform 1142.

The parameters of the cover plate 110 relate to the thicknesses H1 and H2, the outer diameter E1, the difference H2-H1, the notch width a, the thickness C, the arc lengths L1, L2 and L3, the included angle $\beta$, the depth A, the widths D1 and D2, as well as the included angle $\alpha$.

The basic group 6 is set, and the parameters of the basic group 6 are shown in Table 6.1.

Table 6.1: Parameters and Validation Results of Basic Group 6

| Parameter type | Value | Parameter type | Value | Verification result |
|---|---|---|---|---|
| H1/$\mu$m | 115.00 | L1/mm | 5.00 | T1=85s, T2=130s, $\Delta$T=45s |
| H2/$\mu$m | 120.00 | L2/mm | 5.00 | |
| (H2-H1)/$\mu$m | 5.00 | L3/mm | 2.00 | |
| a/mm | 0.60 | $\beta$ | 85° | |
| C/mm | 0.40 | A/mm | 0.32 | |
| D1/mm | 5.00 | D2/mm | 4.20 | |
| E1/mm | 24.0 | $\alpha$ | 135° | |

As can be seen from the verification results in Table 6.1, the opening time of the first sub-groove 121 and the opening time of the second sub-groove 122 meet the evaluation criteria, and the pressure relief at two times is realized while the performance of the explosion-proof structure is ensured.

According to the verification results of both the basic group 5 and the basic group 6, it can be seen that the second sub-portion 114 is provided with the concave platform 1141 and the convex table 1142, so that on premise of ensuring the safety performance of the battery, the time interval between the primary pressure relief and the secondary pressure relief is longer, the pressure relief effect at two times is good, and the reliability of the explosion-proof structure is further improved.

On the basis of the parameters of the basic group 6, the parameter variation of the cover plate 110 is controlled by a single variable method to set the comparative example and the implementing example. The variation parameters and verification results of the comparative example and the implementing example are shown in Table 6.2.

Table 6.2: Verification Results of Comparative Examples and Implementing Examples on the basis of Parameters of Basic Group 6 and changing Width D2 along with Change of Width D1

| | D1 | D2/mm | Verification result |
|---|---|---|---|
| Implementing Example 1 | 4.00 | 3.20 | T1=86s, T2=120s, $\Delta$T=34s |
| Implementing Example 2 | 12.00 | 11.20 | T1=90s, T2=110s, $\Delta$T=20s |
| Comparative Example 1 | 1.00 | 0.20 | T1=72s, T2=136s, $\Delta$T=64s |
| Comparative Example 2 | 18.00 | 17.20 | T1=103s, T2=106s, $\Delta$T=3s |

According to Table 6.2, when the width D1 is within the set range, the purpose of the pressure relief at two times can be realized, and the effect of the pressure relief at two times is better. When the width D1 is lower than the set range, the time interval between the pressure relief at two times is longer. When the width D1 is higher than the set range, the time interval between the pressure relief at two times is longer. So, the effect of the pressure relief of the explosion-proof structure at two times is reduced.

**Claims**

1. An explosion-proof structure applied to a battery, the explosion-proof structure comprising:

    a cover plate (110); and
    an explosion-proof groove (120) provided on the cover plate (110), wherein the explosion-proof groove (120) comprises one or more first sub-grooves (121) and one or more second sub-grooves (122); H1<H2, wherein H1 denotes a thickness of a part of the cover plate (110) where the first sub-groove (121) is located, and H2 denotes a thickness of a part of the cover plate (110) where the second sub-groove (122) is located;
    wherein the part of the cover plate (110) where the first sub-groove (121) is located is opened under a first pressure denoted by P1, and the part of the cover plate (110) where the second sub-groove (122) is located is opened under a second pressure denoted by P2, wherein the first pressure satisfies 0.5Mpa<P1<1.5Mpa; and the second pressure satisfies 1.5Mpa≤P2<2.5Mpa.

2. The explosion-proof structure according to claim 1, wherein a projection of the first sub-groove (121) and a projection of the second sub-groove (122) on one side of the cover plate (110) are formed to be a closed annular shape.

3. The explosion-proof structure according to claim 1, wherein the first sub-groove (121) comprises a first section (1111) and a second section (1112), the first section (1111) comprises a first end (1113) and a second end (1114), the second section (1112) comprises a third end (1115) and a fourth end (1116), and a distance between the first end (1113) and the third end (1115) is greater than a distance between the second end (1114) and the fourth end (1116).

4. The explosion-proof structure according to claim 3, wherein the first sub-groove (121) is spaced apart from the second sub-groove (122), and the first sub-groove (121) is disposed more adjacent to a center of the cover plate (110) than the second sub-groove (122).

5. The explosion-proof structure according to claim 3, wherein a shape of the second sub-groove (122) is arc-shaped, the second sub-groove (122) comprises a fifth end (1121) and a sixth end (1122), and the first sub-groove (121) is located between the fifth end (1121) and the sixth end (1122).

6. The explosion-proof structure according to claim 5, wherein the first end (1113) is connected to the fifth end (1121), the third end (1115) is connected to the sixth end (1122), and the first sub-groove (121) is in communication with the second sub-groove (122) to form a closed shape.

7. The explosion-proof structure according to claim 3, wherein the second end (1114) is disposed more adjacent to a center of the cover plate (110) than the first end (1113), and the fourth end (1116) is disposed more adjacent to the center of the cover plate (110) than the third end (1115);
    or, the first end (1113) is disposed more adjacent to the center of the cover plate (110) than the second end (1114), and the third end (1115) is disposed more adjacent to the center of the cover plate (110) than the fourth end (1116).

8. The explosion-proof structure according to claim 3, wherein the first sub-groove (121) further comprises a third section (1117) disposed between the second end (1114) and the fourth end (1116), and the third section (1117) is smoothly and transitionally connected with the first section (1111) and the second section (1112).

9. The explosion-proof structure according to claim 8, wherein the first section (1111), the second section (1112) and the third section (1117) are each of an arc shape, and bending directions of both the first section (1111) and the second section (1112) are different from a bending direction of the third section (1117).

10. The explosion-proof structure according to claim 9, wherein an included angle between a chord corresponding to the arc shape of the first section (1111) and a chord corresponding to the arc shape of the second section (1112) is denoted by $\beta$, and satisfies 30°≤$\beta$≤150°.

11. The explosion-proof structure according to claim 9, wherein an arc length of the first section (1111) is denoted by L1, an arc length of the second section (1112) is denoted by L2, wherein L1=L2, which satisfies 4mm≤L1=L2≤8mm; and an arc length of the third section (1117) is denoted by L3 and satisfies 1mm≤L3≤3mm.

12. The explosion-proof structure according to any one of claims 1 to 11, wherein 20μm≤H1≤115μm, and 25μm≤H2≤135μm.

13. The explosion-proof structure according to any one of claims 1 to 12, wherein a difference between the thickness of the part of the cover plate where the first sub-groove is located and the thickness of the part of the cover plate where the second sub-groove is located is denoted by H2-H1, and satisfies 5μm≤H2-H1≤20μm.

14. The explosion-proof structure according to any one of claims 1 to 13, wherein the thickness H2 of the part of the cover plate (110) where the second sub-groove (122) is located is calculated by the following equation (1):

$$H2 = \frac{P2*E1}{4Q} \qquad (1)$$

   wherein Q denotes a tensile strength of a material for manufacturing the cover plate (110);
   E1 denotes an outer diameter of an annular shape where the second sub-groove (122) is located; and
   P2 denotes an opening pressure of the part of the cover plate (110) where the second sub-groove (122) is located.

15. The explosion-proof structure according to any one of claims 2 to 14, wherein the thickness H1 of the part of the cover plate (110) where the first sub-groove (121) is located is calculated by the following equation (2):

$$H1 = \frac{P1*E1}{4Q} \qquad (2)$$

   wherein Q denotes a tensile strength of the material for manufacturing the cover plate (110);
   E1 denotes an outer diameter of an annular shape where the second sub-groove (122) is located, wherein the first sub-groove (121) has a same outer diameter as the second sub-groove (122); and
   P1 denotes an opening pressure of the part of the cover plate (110) where the first sub-groove (121) is located.

16. The explosion-proof structure according to any one of claims 2 to 15, wherein a ratio of an arc length of the first sub-groove (121) to an arc length of the second sub-groove (122) is denoted by G and satisfies:

$$\frac{1}{20} \leqslant G \leqslant \frac{1}{7}$$

17. The explosion-proof structure according to any one of claims 1 to 16, wherein the cover plate (110) comprises a first sub-portion (113) and a second sub-portion (114), the first sub-portion (113) is adjacently connected to the second sub-portion (114), the first sub-portion (113) is adjacent to an edge of the cover plate (110), a surface of the second sub-portion (114) which faces towards a core (140) is at least partially higher than a surface of the first sub-portion (113) which faces towards the core (140), a surface of the second sub-portion (114) which is away from the core (140) is at least partially higher than a surface of the first sub-portion (113) which is away from the core (140), and the explosion-proof groove (120) is provided on the second sub-portion (114).

18. The explosion-proof structure according to claim 17, wherein the second sub-portion (114) comprises a concave platform (1141) and a convex platform (1142) that are connected; a surface of the convex platform (1142) which faces towards the core (140) is higher than a surface of the concave platform (1141) which faces towards the core (140) and a surface of the first sub-portion (113) which faces towards the core (140); a surface of the convex platform (1142) which faces away from the core (140) is higher than a surface of the concave platform (1141) which faces away from the core (140) and a surface of the first sub-portion (113) which faces away from the core (140); the first sub-groove (121) is at least partially disposed on the concave platform (1141), and the second sub-groove (122) is at least partially disposed on the convex platform (1142).

19. The explosion-proof structure according to claim 18, wherein the cover plate (110) further comprises a third sub-portion (115), a shape of the third sub-portion (115) is circular, the third sub-portion (115) is concentrically disposed with the second sub-portion (114), and the concave section (1141) and the convex platform (1142) are formed to be a closed annular shape.

20. The explosion-proof structure according to claim 19, wherein the cover plate (110) further comprises a fourth sub-portion (116), a shape of the fourth sub-portion is annular, the fourth sub-portion (116) is located between the second sub-portion (114) and the third sub-portion (115), and the fourth sub-portion connects the second sub-portion (114) and the third sub-portion (115).

21. The explosion-proof structure according to claim 20, wherein a surface of the first sub-portion (113) which faces towards the core (140) is higher than a surface of the fourth sub-portion (116) which faces towards the core (140), and the fourth sub-portion (116) is configured for connecting with an electrode of the battery;

   or, the surface of the first sub-portion (113) which faces towards the core (140), the surface of the fourth sub-portion (116) which faces towards the core (140) and a surface of the concave platform (1141) which faces towards the core (140) are located at a same height.

22. The explosion-proof structure according to any one of claims 19 to 21, wherein a surface of the third sub-portion (115) which faces towards the core (140) is not lower than the surface of the convex platform (1142) which faces towards the core (140), and the surface of the third sub-portion (115) which is away from the core (140) is not lower than the surface of the convex platform (1142) which is away from the core (140).

23. The explosion-proof structure according to any one claims 18 to 22, wherein a width of a top of the concave platform (1141) is denoted by D1 and satisfies 4mm≤D1≤12mm; and a width of a bottom of the concave platform (1141) is denoted by D2, and satisfies:

   D2= D1-2C*tan($\alpha$-90°), and D2>2mm;
   wherein $\alpha$ denotes an included angle formed between the bottom and a side of the concave platform (1141), and satisfies 100°≤$\alpha$≤170°;
   C denotes a thickness of an area of the cover plate (110) which excludes the explosion-proof groove (120).

24. The explosion-proof structure according to any one of claims 18 to 22, wherein a depth of the concave platform (1141) is denoted by A, and satisfies 0.8C≤A≤1.5C, wherein C denotes a thickness of an area of the cover plate (110) which excludes the explosion-proof groove (120).

25. The explosion-proof structure according to any one of claims 18 to 22, wherein an inner diameter of the second sub-portion (114) is denoted by E2 and satisfies 0.4E4≤E2≤0.72E4; an outer diameter of the second sub-portion (114) is denoted by E3, and satisfies 0.75E4≤E3≤0.96E4; E4 denotes a diameter of the cover plate (110) and satisfies 42mm≤E4≤46mm; and a thickness of an area of the cover plate (110) which excludes the explosion-proof groove (120) is denoted by C, wherein

   a difference between the outer diameter of the second sub-portion and the inner diameter of the second sub-portion is denoted by E3-E2, and satisfies 3C≤E3-E2≤27.8C.

26. The explosion-proof structure according to any one of claims 18 to 22, wherein an outer diameter of the annular shape where the second sub-groove (122) is located is denoted by E1, and satisfies E2+C≤E1≤E3-C, wherein C represents a thickness of an area of the cover plate (110) which excludes the explosion-proof groove (120); E2 represents an inner diameter of the second sub-portion (114); and E3 represents an outer diameter of the second sub-portion (114).

27. The explosion-proof structure according to any one of claims 1 to 22, wherein a thickness of an area of the cover plate (110) which excludes the explosion-proof groove (120) is denoted by C, and satisfies 0.4mm≤C≤1.0mm.

28. The explosion-proof structure according to any one of claims 1 to 27, wherein a notch width of the first sub-groove (121) and a notch width of the second sub-groove (122) are the same and denoted by a, and satisfy 0.6mm≤a≤1.5mm.

29. The explosion-proof structure according to any one of claims 1 to 28, wherein a cross-sectional shape of the first sub-groove (121) and/or a cross-sectional shape of the second sub-groove (122) is V-shaped, semi-circular, trapezoidal; U-shaped or parabolic in a thickness direction of the cover plate (110).

30. The explosion-proof structure according to any one of claims 1 to 29, wherein the cover plate (110) comprises a first side (111) and a second side (112) oppositely arranged, and the first sub-groove (121) and the second sub-groove (122) are arranged on the first side (111);

   or, the first sub-groove (121) and the second sub-groove (122) are disposed on the second side (112);
   or, the first sub-groove (121) is disposed on the first side (111), and the second sub-groove (122) is disposed on the second side (112);
   or, the first sub-groove (121) is arranged on the second side (112), and the second sub-groove (122) is arranged on the first side (111).

31. A battery comprising:

     the explosion-proof structure according to any one of claims 1 to 30;
     a core (140); and
     a housing (150) in which the core (140) is mounted, wherein one end of the housing (150) is formed with an opening (151), and the cover plate (110) is sealingly connected to the housing (150) to seal the opening (151).

32. The battery according to claim 31, further comprising a positive terminal (152) disposed at an end of the housing (150) which faces away from the cover plate (110), a first current collector plate (160) welded to the core (140) and disposed between the cover plate (110) and one end of the core (140), a second current collector plate (170) welded to both the core (140) and the positive terminal (152), and disposed between the core (140) and the positive terminal (152), and an insulator (180) disposed between the second current collector plate (170) and the housing (150).

33. A battery pack comprising the battery according to claim 31 or 32.

34. The battery pack according to claim 33, further comprising:
    a mounting seat (130) provided with a plurality of mounting slots (131) and a plurality of baffles (132), wherein one end of the battery which is adjacent to the cover plate (110) is mounted in a corresponding one of the mounting slots (131); the baffles (132) are each located on a side, which faces away from the battery, of a corresponding one of the mounting slots (131); the first sub-groove (121) comprises a first wall (1211) and a second wall (1212); the second wall (1212) is disposed more adjacent to a center of the cover plate (110) than the first wall (1211); and an projection of each of the baffles (132) on a side of the cover plate (110) is located on a side of the first wall (1211) which faces away from the second wall (1212).

35. The battery pack according to claim 34, wherein the mounting seat (130) comprises a first sub-board (133) and a second sub-board (134), wherein the first sub-board (133) and the second sub-board (134) are arranged oppositely and spaced apart with each other, the mounting slots (131) are provided on the first sub-board (133), the baffles (132) are located between the first sub-board (133) and the second sub-board (134), and the baffles (132) are connected to the first sub-board (133).

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

FIG. 17

FIG. 18

FIG. 19

FIG. 20

FIG. 21

FIG. 22

FIG. 23

111 (110)

122

121

1141

1142

150

$120 \begin{cases} 121 \\ 122 \end{cases}$

FIG. 24

G

110

150

G

FIG. 25

FIG. 26

FIG. 27

FIG. 28

FIG. 29

FIG. 30

FIG. 31

Europäisches
Patentamt

European
Patent Office

Office européen
des brevets

# EUROPEAN SEARCH REPORT

**Application Number**

EP 24 20 5873

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/113132 A1 (XU WEIDONG [CN] ET AL) 13 April 2023 (2023-04-13) * paragraph [0072] * | 1-35 | INV. H01M50/143 H01M50/152 H01M50/213 |
| A | CN 114 709 550 A (ANHUI LIXIANG BATTERY TECH CO LTD) 5 July 2022 (2022-07-05) * page 6 * | 1-35 | H01M50/291 H01M50/559 H01M50/342 |
| A | CN 117 254 204 A (XUZHOU HAIFU LIGHT METAL TECH CO LTD) 19 December 2023 (2023-12-19) * paragraph [0204] * | 1-35 | |

**TECHNICAL FIELDS SEARCHED (IPC)**

H01M

The present search report has been drawn up for all claims

| Place of search | Date of completion of the search | Examiner |
|---|---|---|
| The Hague | 11 April 2025 | Goeman, Frits |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 5873

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2025

| Patent document cited in search report | Publication date | Patent family member(s) | Publication date |
|---|---|---|---|
| US 2023113132 A1 | 13-04-2023 | CN 216120624 U | 22-03-2022 |
| | | EP 4167334 A1 | 19-04-2023 |
| | | ES 2983257 T3 | 22-10-2024 |
| | | FI 4167334 T3 | 24-06-2024 |
| | | HU E067369 T2 | 28-10-2024 |
| | | LT 4167334 T | 12-08-2024 |
| | | PT 4167334 T | 08-07-2024 |
| | | US 2023113132 A1 | 13-04-2023 |
| CN 114709550 A | 05-07-2022 | NONE | |
| CN 117254204 A | 19-12-2023 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 314852015 T